# EUROPEAN PATENT SPECIFICATION

(11) **EP 2 391 666 B1**
(45) Date of publication and mention of the grant of the patent: **28.08.2013**
(21) Application number: 10701535.6
(22) Date of filing: 28.01.2010
(51) Int. Cl.: C08G 64/04

(54) **CROSS-LINKABLE AROMATIC POLYCARBONATE**
VERNETZBARES AROMATISCHES POLYCARBONAT
POLYCARBONATE AROMATIQUE RÉTICULABLE

(30) Priority: 28.01.2009 SE 0900080; 26.02.2009 WO PCT/SE2009/000107
(43) Date of publication of application: 07.12.2011
(73) Proprietor: Nexam Chemical AB, 223 81 Lund (SE)
(72) Inventor: ROSENBERG, Jan-Erik, SE-311 41 Falkenberg (SE); RÖME, Daniel, SE-211 50 Malmö (SE); MORIN, Per, SE-252 23 Helsingborg (SE); TOOBY, Richard, SE-221 84 Lund (SE); PERSSON, David, SE-217 51 Malmö (SE); LAGER, Erik, SE-227 62 Lund (SE)
(74) Representative: Ström & Gulliksson AB
(86) International application number: PCT/EP2010/051023
(87) International publication number: WO 2010/086385

(56) References cited:
- GB-A- 1 103 305
- JP-A- 11 172 003
- US-A- 3 321 440
- US-A- 5 374 701
- DATABASE WPI Week 199413 Thomson Scientific, London, GB; AN 1994-106859 XP002572189 -& JP 6 056982 A (IDEMITSU KOSAN CO LTD) 1 March 1994 (1994-03-01)

## Description

### Field of the invention

The present invention refers to an cross-linkable aromatic polycarbonate comprising at least three carbon-carbon triple bonds, said cross-linkable aromatic polycarbonate is obtainable by incorporation, into an aromatic polycarbonate, of at least one acetylenic compound, comprising at least one hydroxyl group and at least one carbon-carbon triple bond, as end capping group, as pendant group and/or as group inside the polymer chain. In further aspects the present invention refers to a composition comprising said cross-linkable aromatic polycarbonate and a molded article obtained from said cross-linkable aromatic polycarbonate or said composition.

### Background

Polycarbonates are a particular group of thermoplastic polymers, which may be moulded and thermoformed. Polycarbonates are very widely used in the modem chemical industry. Their interesting features, including impact resistance and optical properties, position them between commodity plastics and engineering plastics.

Aromatic polycarbonates are amorphous polymers typically having a glass transition temperature of about 150°C. As they are amorphous, relative high molecular weights (i.e. M_{w}>50 000) are needed to provide the polymer with sufficient mechanical stability. However, the high molecular weight contributes to high viscosity of aromatic polycarbonates in melted form. As a consequence, relative high processing temperatures, such as between 270 and 300°C, are needed to decrease the viscosity of the polymer in order to facilitate processing, such as injection molding. Further, the polymer may be subject to thermal degradation above 300°C.

Accordingly, a polycarbonate which may be processed at lower temperatures but having the same mechanical properties as polycarbonates with high molecular weights would be highly desirable.

The majority of aromatic polycarbonates are based on bisphenols and a carbon dioxide source, such as phosgen or an alkyl and/or aryl carbonate. Many bisphenols, such as bisphenol A, bisphenol C, bisphenol F, bisphenol S, bisphenol Z, tetramethyl bisphenol A, tetrabromo bisphenol A, spirobiindane bisphenol and bis(4-hydroxyphenyl)-1,1-dichloroethylene, have been investigated in the production of aromatic polycarbonates.

The copolymer of tetrabromo bisphenol A and bisphenol A was one of the first commercially successful copolymers.

Low levels of halogenated, such as brominated, co-monomers lead to increased flame resistance while having little effect on other properties. Aromatic polycarbonates of bis(4-hydroxyphenyl)-1,1-dichloroethylene has been investigated as flame-resistant polymers with retained good impact properties.

Reduced birefringence may be obtained by using bulky polarisable side groups or eliminated entirely by using structures such as spirobiindane bisphenol.

Important products also include aromatic polycarbonates in blends with other materials, such as branched resins, flame-retardant compositions, foams and other materials. Blends of aromatic polycarbonate with acrylonitrile butadiene styrenes (ABS) and with poly(butylene terephthalate)s (PBT) have shown significant growth since the mid-1980s. Blends comprising aromatic polycarbonates are typically used to tailor performance and price to specific markets.

Aromatic polycarbonates, furthermore, often contains small amounts of di-, tri- or polyfunctional monomers, such as phenols, hydroquinones, cresoles, resorcinols and/or catechols and similar aromatic hydroxy compounds, including alkyl, alkenyl, cycloalkyl, cycloalkenyl and aryl substituted species thereof.

Aromatic polycarbonates exhibit excellent resistance to hydrolysis and excellent mechanical properties, such as tensile strength, impact resistance, flexural strength and elongation. Despite being polymers having excellent properties, aromatic polycarbonates suffer from certain shortcomings with regard to for instance flow characteristics and solvent resistance. A polycarbonate not suffering from said drawback would be highly desirable.

Aromatic polycarbonates may be processed by virtually all conventional thermoplastic processing operations, of which injection molding is the most common.

Extrusion produces film, sheet, and stock shapes. Structural foam molding is also a valuable commercial technique. Injection blow molding of aromatic polycarbonates produces an assortment of containers from water bottles and milk bottles to outdoor lighting protective globes. Conventional thermoforming of sheet and film is applicable to production of skylights, radomes, signs, curved windshields, prototype production of body parts for automobiles, skimobiles, boats and the like.

Bisphenol A polycarbonates are malleable and can be cold-formed like metals, and may be cold-rolled, stamped or forged. Aromatic polycarbonates of low birefringence are frequently used in compact disks and other laser-readable data storage systems.

There are, despite the fact that aromatic polycarbonates have excellent physical and chemical properties and for a long time have been widely used for resins, films, fibers, molded articles and so on, demands for improved and/or modified properties, such as increased thermal and chemical resistance, better creep performance at elevated temperature, decreased release of monomers, such as bisphenol A, lowered operational temperatures and retained properties during and after exposure to for instance harsh temperature, atmosphere, mechanical and radiation conditions.

Attempts to improve the properties of polycarbonates include cross-linking by use of reactive end groups, such as aliphatically unsaturated imido groups (US 3,652,715 and US 3,770,697), ethenyl aryl moieties (WO 94/19390), and arylcyclobutene moieties (WO 95/14742). According to WO 94/19390, also epoxides and acrylates have been use in attempts to cross-link polycarbonates. Such methods typically require initiation of the cross-linking by use of radicals or catalysts.

Marks et al have in Journal of Polymer Science: Part A: Polymer Chemistry, Vol. 38, 2352-2358 (2000) reported the use of m-ethynylphenol and *para-tert*butylphenol as end groups in bisphenol A polycarbonates. By use of more *para-tert*butylphenol than m-ethynylphenol, branching may be achieved essentially without any gel formation.

### Summary

Accordingly, the present invention preferably seeks to mitigate, alleviate, eliminate or circumvent one or more of the above-identified deficiencies in the art and disadvantages singly or in any combination and solves at least the above mentioned problems by providing a cross-linkable aromatic polycarbonate comprising at least three carbon-carbon triple bonds, wherein said cross-linkable aromatic polycarbonate is obtainable by co-polymerization of at least one aromatic diol, at least one carbon dioxide source and at least two different acetylenic compounds, wherein said at least two different acetylenic compounds comprise one acetylenic compound comprising one residue represented by -OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, and at least one triple bond, and one acetylenic compound comprising two residues represented by OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, and at least one triple bond, wherein the ratio between said acetylenic compounds and said aromatic diol in said co-polymerization is lower than 1:1; and wherein said aromatic diol is distinct from said acetylenic compounds,
said cross-linkable aromatic polycarbonate comprises at least one carbon-carbon triple bond as part of a pendant group, or at least one carbon-carbon triple bond within the polymer back bone; and at least one carbon-carbon triple bond as part of an end-capping group; and
said two different acetylenic compounds are respectively selected from compounds according to formula II, or VII 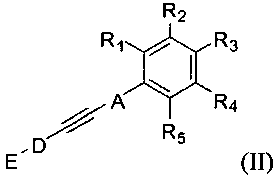 wherein
R1 and R5 are independently selected from the group consisting of hydrogen, hydroxy, OC(O)R21, wherein R21 is OC1-C4 alkyl, OPhenyl, OBenzyl, NHC1-C4 alkyl, NHPhenyl, NHBenzyl, or chlorine, C1-C4 alkyl, such as methyl and tert-butyl, CF3 and a residue according to formula (III);
R2 to R4 are independently selected from the group consisting of hydrogen, hydroxy, OC(O)R22, wherein R22 is OC1-C4 alkyl, OPhenyl, OBenzyl, NHC1-C4 alkyl, NHPhenyl, NHBenzyl, or chlorine, and a residue according to formula (III);
"A" is a direct bond, C(O), SO2 or CH2;
"D" is a direct bond, C(O), SO2 or CH2;
"E" is selected from the group consisting of hydrogen, C1-4 alkyl, such as methyl, ethyl and tert-butyl, and a residue according to formula (IV);
Formula (III) is a residue as depicted below 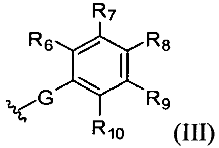 wherein
R6 to R10 are independently selected from the group consisting of hydrogen, hydroxy, and OC(O)R23, wherein R23 is OC1-C4 alkyl, OPhenyl, OBenzyl, NHC1-C4 alkyl, NHPhenyl, NHBenzyl, or chlorine;
"G" is a direct bond, C(O), O, SO2, CH2, C(CH3)2, or C(CF3)2; and
the waved line indicates the point of attachment;
Formula (IV) is a residue as depicted below 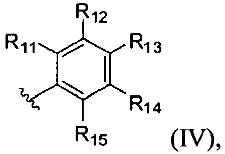 wherein
R11 and R15 are independently selected from the group consisting of hydrogen, hydroxy, OC(O)R24, wherein R24 is OC1-C4 alkyl, OPhenyl, OBenzyl, NHC1-C4 alkyl, NHPhenyl, NHBenzyl, or chlorine, C1-C4 alkyl, such as methyl and tert-butyl, CF3 and a residue according to formula (V);
R12 to R14 are independently selected from the group consisting of hydrogen, hydroxy, OC(O)R25, wherein R25 is OC1-C4 alkyl, OPhenyl, OBenzyl, NHC1-C4 alkyl, NHPhenyl, NHBenzyl, or chlorine, and a residue according to formula (V); and
the waved line indicates the point of attachment;
Formula (V) is a residue as depicted below 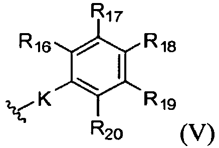 wherein
R16 to R20 are independently selected from the group consisting of hydrogen, hydroxy, and OC(O)R26, wherein R26 is OC1-C4 alkyl, OPhenyl, OBenzyl, NHC1-C4 alkyl, NHPhenyl, NHBenzyl, or chlorine;
"K" is a direct bond, C(O), O, SO2, CH2, C(CH3)2, or C(CF3)2; and
the waved line indicates the point of attachment; 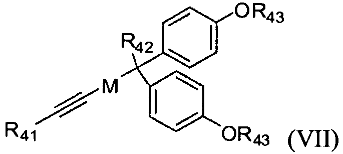 wherein
M is a direct bond, CH2, or phenylene;
R41 is hydrogen, C1-C4 alkyl or phenyl;
R42 is hydrogen, methyl, CF3, phenyl or a residue according to formula (VIII) 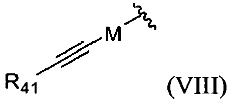 wherein M and R41 are as disclosed above for formula (VII);
the waved line indicates the point of attachment; and
R43 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, or from compounds according to the group consisting of 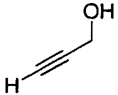 and

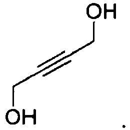

Another aspect of the invention relates to such a cross-linkable aromatic polycarbonate which have been cross-linked.

Another aspect of the invention relates to a composition comprising cross-linkable aromatic polycarbonate.

Another aspect of the invention relates to an article obtainable by shaping a cross-linkable aromatic polycarbonate or a composition comprising at least one cross-linkable aromatic polycarbonate.

Further advantageous features of the invention are defined in the dependent claims and with regard to embodiments disclosed herein.

### Description of embodiments

Acetylenic above and hereafter refers to any chemical compound, including monomers, oligomers and polymers, and/or any chemical group, which compound or group has at least one carbon-carbon triple bond.

It has unexpectedly been found that cross-linkable aromatic polycarbonates may be obtained by incorporation of acetylenic compounds comprising carbon-carbon triple bonds in aromatic polycarbonates. Such novel cross-linkable aromatic polycarbonate; as disclosed herein, has at least three carbon-carbon triple bonds as part of end-capping groups, pendant groups and/or the polymer back bone.

The carbon-carbon triple bonds allows for cross-linking, such as acetylenic cross-linking, of the cross-linkable aromatic polycarbonates, as alternative and/or additional cross-linking mechanism, thus implying that improved and/or changed properties, such as changed E-module value, changed impact strength and improved resistance towards thermo-oxidative, thermal, oxidative and/or mechanical degradation may be achieved. Further, the solvent resistance may be increased. In addition, the release of unreacted monomers present within the polymer composition may be minimized as the cross-linking will decrease diffusion rates within the polymer.

The acetylenic residues were found to be compatible with normal thermoplastic processing methods and not to affect the optical properties of aromatic polycarbonates to any large extent. Thus, cross-linkable aromatic polycarbonates may be processed using normal thermoplastic processing methods, before cross-linking is initiated.

Further, the cross-linking implies that polycarbonates with lower molecular weight may be used. Compared to polycarbonates of the art with high molecular weights, lower processing temperature may hence be used implying easier processing or better processability.

An embodiment of the present invention thus refers to a cross-linkable aromatic polycarbonate, which is obtainable by co-polymerization of at least one aromatic diol, such as a monomer comprising two phenolic residues, at least one carbon dioxide source, such as carbon dioxide, phosgene, urea, alkyl urea, arylalkylurea, alkylcarbonate, alkenylcarbonate and/or an arylcarbonate, and at least one acetylenic compound, comprising at least one residue represented by -OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, and at least one triple bond. The cross-linkable aromatic polycarbonate preferably comprises at least three carbon-carbon triple bonds. The ratio between said acetylenic compound and said aromatic diol in said co-polymersation is preferably lower than 1:1, such as lower than 1:2, 1:3, 1:4 or 1:5. Further, the aromatic diol is preferably distinct from the acetylenic compound.

In order to obtain sufficient cross-linking and thus modify the properties of the cross-linked polycarbonate, it is important that the polycarbonate comprises at least three carbon-carbon triple bonds. The properties of polycarbonates only having reactive end-groups, i.e. polycarbonates comprising one or possibly two reactive groups, will only be affected to a very limited extent upon cross-linking. Accordingly, such polycarbonates are often referred to as branched rather than cross-linked polycarbonates.

Cross-linkable aromatic polycarbonates comprising at least three carbon-carbon triple bonds, as disclosed herein, will comprise at least one carbon-carbon triple bond as part of a pendant group or as part of the polymer back bone. Thus the polymer chain may be cross-linked at least at three sites of which at least one is present within the polymer chain. Compared to polycarbonates only having reactive end-groups, a much more cross-linked network may thus be obtained. In order to provide the cross-linked aromatic polymer with the enhanced properties discussed herein a certain degree of cross-linking was found advantageous to have at least three carbon-carbon triple bonds in each cross-linkable aromatic polycarbonate.

In order to maintain the beneficial properties of aromatic polycarbonates, the ratio between the acetylenic compound and the aromatic diol should preferably be lower than 1:1, such as lower than 1:2, 1:3, 1:4, 1:5, or 1:10 in the co-polymersation. Similarly the aromatic diol should preferably be distinct from the acetylenic compound, as the triple bonds to some extent may affect the properties of the aromatic polycarbonate.

A discussed above, a certain degree of cross-linking was found advantageous with respect to the properties to be obtained upon cross-linking. Accordingly, it is preferred if ratio between the acetylenic compound and the aromatic diol is higher than 1:100, such as higher than 1:50, 1:25, 1:15 or 1:10, in the co-polymersation.

According to one embodiment, the cross-linkable aromatic polycarbonate comprises at least one, such as least three, carbon-carbon triple bond(s) as part of a pendant group(s). Cross-linking of carbon-carbon triple bonds which are part of pendant groups, are initiated at lower temperatures compared to carbon-carbon triple bonds, which are part of the polymer back bone. As aromatic polycarbonates may be subject to thermal degradation at higher temperatures, cross linking at a temperature below 300°C is preferred.

According to an embodiment, the cross-linkable aromatic polycarbonate comprises at least one, such as least three, carbon-carbon triple bond(s) within the polymer back bone.

According to an embodiment, the cross-linkable aromatic polycarbonate, in addition to at least one carbon-carbon triple bond within the polymer back bone and/or at least one carbon-carbon triple bond as part of a pendant group, may comprise at least one carbon-carbon triple bond as part of an end-capping group. A cross-linkable aromatic polycarbonate having carbon-carbon triple bond within or along the polymer chain as well as at the end(s) of the polymer chain may be more densely cross-linked. Further, cross-linking may be achieved at a lower temperature.

According to one embodiment, end-capping group refers to part of residue ending a polymer chain. An end-capping acetylenic compound is a mono functional compound acting chain terminating upon polymerization.

According to one embodiment, pendant group refers to a part of a residue present within the polymer chain as a monomer, wherein the residue comprises a pendant part, which not is part of the polymer backbone. Poly-4-etynyl-phenylalanin is an example of a polymer having pendant group comprising a carbon-carbon triple bond. A residue having a pendant group originates from a bi-functional compound acting chain propagating upon polymerization.

According to one embodiment, within the polymer chain, or polymer back bone, refers to a polymer chain, wherein the group referred to, such as a triple bond, is part of the polymer backbone. As an example, a polymer chain comprising a 4,4'-etyn-1,2-yl-(1,1'-biphenyl) moiety, would have the triple bond within the polymer chain.

Having the cross-linking group as an end capping group, will affect the inherent stability of the polymer chain to a limited extent, as the linear polymer chain not is interrupted by any group distinct from the monomer residues. However, each polymer chain may only comprise two cross-linking sites unless the chain is branched.

On the contrary, by use of polymer chain having the cross-linking group as part of a pendant group, the polymer chain may comprise more than two cross-linking sites without the chain having to be branched. Further, other regions than the ends of the polymer chain may be cross-linked. Thus a higher degree of cross-linking may be achieved.

By putting the cross-linkable sites in the main chain, the curing temperature is increased compared to pendant or end-capping cross-linking groups. By combining, cross-linkable sites in the main chain, with pendant or end-capping cross-linking groups, the increase in the curing temperature may be less.

When used herein "acetylenic residue" or "residue comprising at least one carbon-carbon triple bond" is intended to mean a compound comprising at least one carbon-carbon triple bond, which by reaction has been incorporated into an aromatic polycarbonate. Similarly, acetylenic compound is intended to mean a compound comprising at least one carbon-carbon triple bond.

In one embodiment, "poly" when used to describe a polymer, such as cross-linkable aromatic polycarbonate, is intended to mean that the polymer comprises more than 10 repeating units, such as more than 15 or 20 repeating units. The number of repeating units in a polymer affects the melting properties of the polymers and may provide the melted polymer with shear-thinning properties. Thus, by having a polymer with more than 10 repeating units, such as more than 15 or 20 repeating units, a polymer suitable for molding, such injection molding, may be obtained.

In an embodiment, wherein at the least one residue comprising at least one carbon-carbon triple bond is present within the polymer chain, poly as used to describe the aromatic polycarbonate, relates to the total number of repeating units in said polymer, whether or not interrupted by the presence of residue comprising at least one carbon-carbon triple bond in the polymer chain.

The cross-linkable aromatic polycarbonate of the present invention may be processed by thermoplastic processing operations used with conventional aromatic polycarbonates. The incorporation of one or more carbon-carbon triple bonds allows acetylenic cross-linking thus implying for instance improved and/or changed properties, such as changed E-module value, changed impact strength, improved solvent resistance and/or improved resistance towards thermo-oxidative, thermal, oxidative and/or mechanical degradation.

According to one embodiment the acetylenic compound may be selected from compounds according to formula II, VI or VII 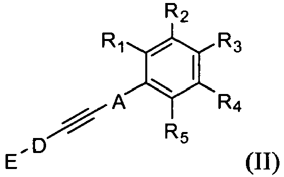 wherein
R1 and R5 are independently selected from the group consisting of hydrogen, hydroxy, OC(O)R21, wherein R21 is OC1-C4 alkyl, OPhenyl, OBenzyl, NHC1-C4 alkyl, NHPhenyl, NHBenzyl, or chlorine, C1-C4 alkyl, such as methyl and tert-butyl, CF3 and a residue according to formula (III);
R2 to R4 are independently selected from the group consisting of hydrogen, hydroxy, OC(O)R22, wherein R22 is OC1-C4 alkyl, OPhenyl, OBenzyl, NHC1-C4 alkyl, NHPhenyl, NHBenzyl, or chlorine, and a residue according to formula (III);
"A" is a direct bond, C(O), SO2 or CH2;
"D" is a direct bond, C(O), SO2 or CH2;
"E" is selected from the group consisting of hydrogen, C1-4 alkyl, such as methyl, ethyl and tert-butyl, and a residue according to formula (IV);
Formula (III) is a residue as depicted below 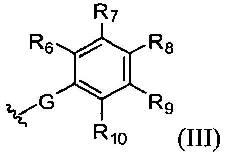 wherein
R6 to R10 are independently selected from the group consisting of hydrogen, hydroxy, and OC(O)R23, wherein R23 is OC1-C4 alkyl, OPhenyl, OBenzyl, NHC1-C4 alkyl, NHPhenyl, NHBenzyl, or chlorine;
"G" is a direct bond, C(O), O, SO2, CH2, C(CH3)2, or C(CF3)2; and
the waved line indicates the point of attachment;
Formula (IV) is a residue as depicted below 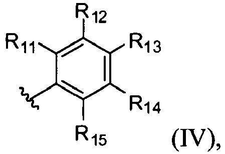 wherein
R11 and R15 are independently selected from the group consisting of hydrogen, hydroxy, OC(O)R24, wherein R24 is OC1-C4 alkyl, OPhenyl, OBenzyl, NHC1-C4 alkyl, NHPhenyl, NHBenzyl, or chlorine, C1-C4 alkyl, such as methyl and tert-butyl, CF3and a residue according to formula (V);
R12 to R14 are independently selected from the group consisting of hydrogen, hydroxy, OC(O)R25, wherein R25 is OC1-C4 alkyl, OPhenyl, OBenzyl, NHC1-C4 alkyl, NHPhenyl, NHBenzyl, or chlorine, and a residue according to formula (V); and the waved line indicates the point of attachment;
Formula (V) is a residue as depticted below 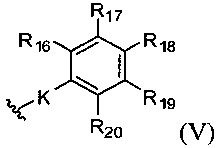 wherein
R16 to R20 are independently selected from the group consisting of hydrogen, hydroxy, and OC(O)R26, wherein R26 is OC1-C4 alkyl, OPhenyl, OBenzyl, NHC1-C4 alkyl, NHPhenyl, NHBenzyl, or chlorine;
"K" is a direct bond, C(O), O, SO2, CH2, C(CH3)2, or C(CF3)2; and
the waved line indicates the point of attachment; 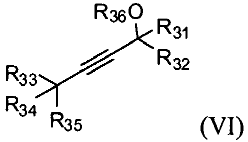 wherein
R31 to R34 are independently selected from the group consisting of hydrogen, phenyl, C1-C4 alkyl, such as methyl, or R31 and R32, and/or R33 and R34, are linked together to form a C5-6 cycloalkyl;
R35 is hydroxy, OC(O)OC1-C4 alkyl, OC(O)OPhenyl, OC(O)OBenzyl, OC(O)NHC1-C4 alkyl, OC(O)NHPhenyl, OC(O)NHBenzyl, OC(O)C1, phenyl, or C1-C4 alkyl, such as methyl; 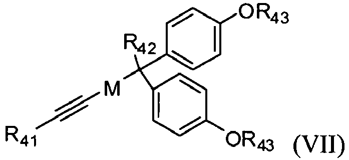 wherein
M is a direct bond, CH2, or phenylene;
R41 is hydrogen, C1-C4 alkyl or phenyl; and
R42 is hydrogen, methyl, CF3, phenyl or a residue according to formula (VIII) 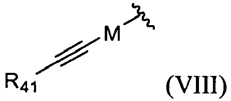 wherein M and R41 are as disclosed above for formula (VII);
the waved line indicates the point of attachment; and
R43 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl;

The acetylenic compound may comprise two groups represented by -OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl. Acetylenic compounds having two such groups may act chain propagating, while compounds only having one such group may act chain terminating. Preferably, R27 is hydrogen.

According to one embodiment, it is preferred if R1 and R5 of formula (II) are independently selected from the group consisting of hydrogen, C1-4 alkyl, such as methyl and tert-butyl, CF3 and residue according to formula (III), wherein R6 to R10 preferably are hydrogen. A group distinct from hydrogen as R1 and/or R5 will constitute a steric hindrance for the curing reaction of the triple-bond. Thus, the curing temperature may be increased if R1 and/or R5 are distinct from hydrogen, especially if "A" is a direct bond. Similarly, it is preferred if R11 and R15, if present, are independently selected from the group consisting of hydrogen, C1-4 alkyl, such as methyl and tert-butyl, CF3 and residue according to formula (V), wherein R16 to R20 preferably are hydrogen. As for R1 and R5, the curing temperature may be increased if R11 and/or R15 are distinct from hydrogen, especially if "D" is a direct bond.

According to an embodiment, it is preferred if R1 and R5 of formula (II) above are hydrogen. Furthermore, it is preferred if R6, R10, R11, R15, R16 and R20, if present, are hydrogen as well. A group distinct from hydrogen as R1 and/or R5 will constitute a steric hindrance for the curing reaction of the triple-bond. Thus, the curing temperature may be decreased if R1 and/or R5 are hydrogen, especially if "A" is a direct bond. Similarly, R6, R10, R11, R15, R16 and R20, if present, will constitute a steric hindrance for the curing reaction of the triple-bond. Thus, the curing temperature may be decreased if R6, R10, R11, R15, R16 and/or R20 are hydrogen.

According to an embodiment, "E" is selected from the group consisting of hydrogen and a residue according to formula (IV).

An cross-linkable aromatic polycarbonate having triple bonds as part of pendant groups may be obtained by use of acetylenic compounds according to formula (II) wherein R2 and R4 are residues according to formula (III), wherein one of R7 to R9 in both R2 and R4 are hydroxy, OC(O)OC1-C4 alkyl, OC(O)OPhenyl, OC(O)OBenzyl, OC(O)NHC1-C4 alkyl, OC(O)NHPhenyl, OC(O)NHBenzyl, or OC(O)Cl, such as hydroxy, the other two being hydrogen.

A cross-linkable aromatic polycarbonate having triple bonds as part of polymer back bone may be obtained by use of acetylenic compounds according to formula (II) wherein "E" and "D" are selected such that said acetylenic compound is symmetrical with respect to the triple bond.

A cross-linkable aromatic polycarbonate having triple bonds as part of an end capping group may be obtained by use of acetylenic compounds according to formula (II) having only one residue represented by -OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, wherein R1 and R5 are hydrogen, one of R2 to R4 is hydroxy, OC(O)OC1-C4 alkyl, OC(O)OPhenyl, OC(O)OBenzyl, OC(O)NHC1-C4 alkyl, OC(O)NHPhenyl, OC(O)NHBenzyl, OC(O)C1, such as hydroxy, or a residue according to formula (III), wherein R6 and R10 are hydrogen, one of R7 to R9 is hydroxy, or C(O)R23, wherein R23 is OC1-C4 alkyl, OPhenyl, OBenzyl, NHC1-C4 alkyl, NHPhenyl, NHBenzyl, or chlorine, and the other two of R7 to R9 being hydrogen, and the other two of R2 to R4 being hydrogen.

According to an embodiment the acetylenic compound may be selected from compounds according to formula II.

According to an embodiment the acetylenic compound may be selected from compounds according to formula VI. In such compounds R31 to 35 may be selected such that said acetylenic compound is symmetrical with respect to the triple bond.

According to an embodiment the co-polymerization used to obtain the cross-linkable aromatic polycarbonate may comprises at least two different acetylenic compounds. The two acetylenic compounds may be compounds according to formula II, VI and/or VII. A cross-linkable aromatic polycarbonate obtained by use of two different acetylenic compounds may comprise triple bonds which are part of pendant groups as well as of end capping groups. Further, cross-linkable aromatic polycarbonate obtained by use of two different acetylenic compounds may also comprise triple bonds which are part of the polymer back bone as well as of end capping groups. Such combinations may be used to affect the temperature at which the triple bonds re cross-linked and also to affect the properties obtained by the cross-linking. In an embodiment, wherein at least two different acetylenic compounds are used in the co-polymerization, the compounds may comprise one acetylenic compound comprising one residue represented by-OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, and at least one triple bond, and one acetylenic compound comprising two residues represented by - OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, and at least one triple bond.

According to an embodiment "A", "D", "E", "G", and "K", if present, are independently selected from the group consiting of a direct bond and C(O).

According to an embodiment the acetylenic compound is selected from the group consisting of:

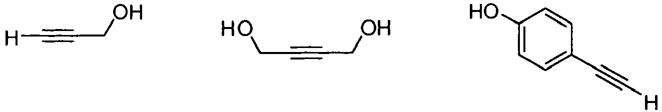

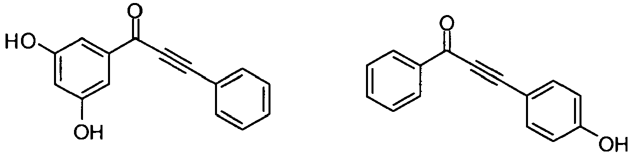

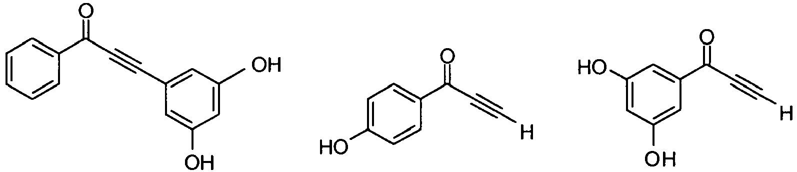

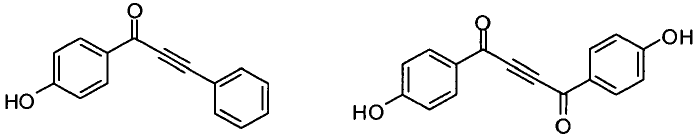

According to an embodiment the acetylenic compound may be selected from the group consisting of ethynyl phenol, methylethynyl, phenol, phenylethynyl phenol, naphthylethynyl phenol, ethynyl cresole, methylethynyl cresole, phenylethynyl cresole, naphthylethynyl cresole, ethynyl hydroquinone, methylethynyl hydroquinone, phenylethynyl hydroquinone, naphthylethynyl hydroquinone, ethynyl catechole, methylethynyl catechole, phenylethynyl catechole, naphthylethynyl catechole, ethynyl resorcinole, methylethynyl resorcinole, phenylethynyl resorcinole, naphthylethynyl resorcinol, ethynyl bisphenol A, methylethynyl bisphenol A, phenylethynyl bisphenol A, naphthylethynyl bisphenol A, ethynyl bisphenol C, methylethynyl bisphenol C, phenylethynyl bisphenol C, naphthylethynyl bisphenol C, ethynyl bisphenol F, methylethynyl bisphenol F, phenylethynyl bisphenol F, naphthylethynyl bisphenol F, ethynyl bisphenol S, methylethynyl bisphenol S, phenylethynyl bisphenol S, naphthylethynyl bisphenol S, ethynyl bisphenol Z, methylethynyl bisphenol Z, phenylethynyl bisphenol Z and naphthylethynyl bisphenol Z as well as linear or branched alkyl, halo, haloalkyl and/or alkylhalo derivatives of a said acetylenic compound.

According to an embodiment the aromatic diol may be a diol according to formula (IX) 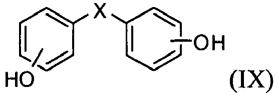 wherein X is a direct bond, C(CH₃)₂, CH₂, C(CF₃)₂, C(O), O or SO₂. Preferably, the aromatic diol is a diol according to formula (XI) 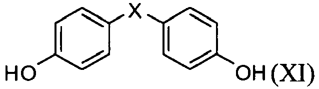 wherein X is a direct bond, C(CH₃)₂, CH₂, C(CF₃)₂, C(O), O or SO₂. Preferably X in formula (XI) is C(CH₃)₂, CH₂, or C(CF₃)₂.

According to one embodiment, the aromatic diol is selected from the group consisting of 2,2-Bis(4-hydroxyphenyl)propan, 1,1-Bis(4-hydroxyphenyl)-1-phenylethane, 2,2-Bis(4-hydroxyphenyl)hexafluoropropane, 2,2-Bis(4-hydroxyphenyl)butane, Bis-(4-hydroxyphenyl)diphenylmethane, 2,2-Bis(3-methyl-4-hydroxyphenyl)propane, 2,2-Bis(4-hydroxyphenyl)-1,1-dichlorethylene, 1,1 -Bis(4-hydroxyphenyl)ethane, Bis(4-hydroxydiphenyl)methane, 2,2-Bis(4-hydroxy-3-isopropyl-phenyl)propane, 1,3-Bis(2-(4-hydroxyphenyl)-2-propyl)benzene, 1,4-Bis(2-(4-hydroxyphenyl)-2-propyl)benzene, 5,5' -(1-Methylethyliden)-bis[1,1'-(bisphenyl)-2-ol]propane,1-Bis(4-hydroyphenyl)-3,3,5-trimethyl-cyclohexane, 1,1-Di(4-hydroxyphenyl)-cyclohexane, and spirobiindane bisphenol. Preferably the aromatic diol is selected from the group consisting of 2,2-Bis(4-hydroxyphenyl)propan (bisphenol A), 2,2-Bis(3-methyl-4-hydroxyphenyl)propane (bisphenol C), Bis(4-hydroxydiphenyl)methane (bisphenol F), 1,1-Di(4-hydroxyphenyl)-cyclohexa (bisphenol Z), spirobiindane bisphenol and 2,2-bis(4-hydroxyphenyl)-1, 1-dichloroethylene.

According to one embodiment the aromatic diol is selected from the group consisting of bisphenol A, a bisphenol C, a bisphenol F, a bisphenol S, a bisphenol Z, a spirobiindane bisphenol and/or a bis(4-hydroxyphenyl)-1,1-dichloroethylene. According to a preferred embodiment the aromatic diol is bisphenol A.

According to one embodiment the aromatic diol is selected from the group consisting of 4,4'-, 3,3'-, 2,2'-, 2,3'- 2,4'- and 3,4'-diphenyl diols.

In addition to the aromatic diol further compounds, such as hydroquinone, resorcinol, catechol, and dihydroxybiphenyl, such as 4,4'-biphenyl, may be present during the co-polymerisation.

The carbon dioxide source used in the polymerization may also be denoted as a carbonic acid equivalent.

Although the carbon dioxide source may be carbon dioxide, the carbon dioxide source is preferably selected from the group consisting of phosgene, urea, alkyl urea, such as N-ethylurea, N, N'-dimethylurea, and N, N'-diethylurea, arylalkylurea, such as N-phenyl-N'-ethylurea, alkylcarbonate, such as dimethylcarbonate, and diethylcarbonate, alkenylcarbonate, such as bis-allylcarbonate, and arylcarbonate, such as di-phenylcarbonate. More preferably the carbon dioxide source is selected from the group consisting phosgene, urea, dimethylcarbonate, and diethylcarbonate.

Further, the carbon dioxide source may be activated aromatic diols according to formula (IX) or (XI), as disclosed above, wherein the hydroxyl groups have been converted to equivalents to carbonic acid residues, such as -OC(O)Cl, -OC(O)OMe, OC(O)OEt, -OC(O)NH2. As well known within the art, it may be advantageous to use an activated diol as a carbon dioxide source.

Accordingly, an embodiment refers to a cross-linkable aromatic polycarbonate obtainable by use of carbon dioxide source according to formula XII, 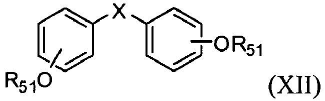 wherein X is direct bond, C(CH₃)₂, CH₂, C(CF₃)₂, C(O), O or SO₂; and
R51 is C(O)Cl, C(O)NH2, C(O)OMethyl, or C(O)OEthyl.

Aromatic polycarbonates are completely amorphous and have a glass transition temperature of about 150 °C. Above 150 °C they soften gradually, but slowly, and do not flow freely unless the temperature is above 300 °C.

Further, aromatic polycarbonates may be subject to thermal degradation above 300 °C. As a consequence injection molding is more difficult than for other common thermoplastics.

Low molecular mass grades of aromatic polycarbonates, having a weight average molecular weight (M_{w}) of less than 30 000 and being less viscous upon heating than higher grades, are easier to mould than higher grades having M_{w} of more than 50 000. However, as the properties are linked to the chain length, the properties, such as ductility, of the low molecular mass grades are inferior. The toughest grades have the highest molecular mass, but are also difficult to process.

Cross-linking of the cross-linkable aromatic polycarbonate disclosed herein may compensate for the loss of strength at shorter chain lengths. Hence, on embodiment of the invention relates to cross-linkable aromatic polycarbonate, as disclosed herein, having a weight average molecular weight (M_{w}) of 30 000 or less, such as 20 000, 15 000 or 12 500 or less, as determined with gel permeation chromatography calibrated against monodisperse bis-phenol A polycarbonates using detector(s), such as a refractive index detector and/or an evaporative light scattering detector. Such a low molecular mass grade cross-linkable aromatic polycarbonate may be processed at lower temperature. Upon cross-linking, the mechanical properties of the cross-linked aromatic polycarbonate is superior or at least comparable to high molecular weight aromatic polycarbonates.

One of the objects of the present invention is to modify the mechanical properties of aromatic polycarbonates and compositions comprising those. Among these modifications of properties can be mentioned: higher softening temperature, higher E-modulus, solvent resistance and improved ability to counteract creep strain.

Accordingly, one embodiment relates to a cross-linked, cross-linkable aromatic polycarbonate as disclosed herein. The cross-linking will affect the properties of the polymer, such as the thermo stability, the glass transition temperature, mechanical properties, such as creep behavior, ductility, E-modulus and elongation at break. Further, the cross-linking is believed to enhance the UV-resistance and solvent resistance. In addition, the leakage of un-reacted aromatic diols present within the polymer blend, such as Bisphenol A, which polycarbonates suffers from, will most probably be significantly reduced.

One embodiment, relates to a cross-linked, cross-linkable aromatic polycarbonate as disclosed herein, wherein the cross-linking has increased the E-modulus with at least 10%, such as at least 20% or even 30%.

According to one embodiment cross-linked is intended to mean that at least 15 %, such as at least 30, 50, 70 or at least 85%, of the carbon-carbon triple bonds of the cross-linkable aromatic polycarbonate have been cross linked, such as via a percyclic, addition or di-radical reactions. The preferred degree of cross-linking will differ between different polymers and different applications.

It is understood that the triple bonds of the cross-linkable aromatic polycarbonate of the present invention may be part of end capping groups, pendent groups or be present as part of the polymer back bone. This will, of course provide the cured polymer with different properties.

It is possible to further modify the mechanical properties by using methods known in the art together with the cross-linkable aromatic polycarbonate and/or the composition herein disclosed. The purpose of such modifications is typically to reinforce for strength, to fill for higher density, dimension stability and higher stiffness, adding of conductive materials for avoiding static charging and pigmentation for aesthetic properties.

It is known in the art to add different types of fibers as reinforcements. Fibers suitable for use together with the cross-linkable aromatic polycarbonate and/or the composition of the present invention can be exemplified by glass fibers, carbon fibers, steel fibers, aramide fibers, natural organic fibers, such as cellulose fibers, flax fibers, cotton fibers and silk. However, most organic and inorganic fibers that are able to withstand the process temperatures may prove useful. It is also possible to use fullerenes for reinforcing as well as for changing other mechanical properties.

Fillers are typically used for increasing dimension stability even though a few other mechanical properties, such as density, rigidity and acoustic properties may be altered by means of fillers. Fillers may be organic like cellulose or inorganic, such as minerals like for instance mica, lime and talcum.

It is furthermore possible to add stabilizers to said cross-linkable aromatic polycarbonate and/or said composition, such as compounds stabilizing towards exposure to ultraviolet light, heat or other exposure that may cause for instance polymer chain breakdown. One may in this context also mention the possibility to add different kinds of fire retarding agents to the polymer.

It is furthermore possible to modify the properties of the cross-linkable aromatic polycarbonate and/or the composition as disclosed herein by means of plasticizers, lubricants or impact modifiers yielding for instance a polymer with elastic properties having improved thermal stability. It is also possible to utilize the cross-linkable aromatic polycarbonate together with polymer blends as well as copolymers.

The electrical properties of the cross-linkable aromatic polycarbonate and/or the composition of the present invention may also be modified. This may be achieved by adding for instance an insulation modifier. The most common modifier is carbon black which is used in smaller quantities to achieve antistatic properties. There are besides carbon black also other known substances and compounds used for obtaining above or portions of thereof. Metal fibers, carbon fibers and metal powder are only a few examples of such materials. Some of these materials also serve the purpose of reinforcing and filling agents.

The cross-linkable aromatic polycarbonate and/or the composition comprising it may also be expanded to change the density and thermal insulation property by adding a blowing, expanding or foaming agent. This may of course be used in combination with other additives.

It is in some applications also advantageous to modify the surface properties of the cross-linkable aromatic polycarbonate and/or the composition. One such way is by adding anti-microbial agents for which the purpose is obvious. Another way is by adding so called tackifiers increasing friction if and when needed.

A further embodiment of the present invention refers to a composition comprising at least one cross-linkable aromatic polycarbonate as disclosed herein. The composition may further comprise at least one additional polymer, such as at least one additional aromatic polycarbonate, and/or at least one filler, reinforcement, pigment, plasticizer and/or any other additive known in the art. Preferred embodiments of said cross-linkable aromatic polycarbonate are as disclosed herein. The cross-linkable aromatic polycarbonate is preferably present in an amount corresponding to between 0.1 and 99.9 wt%, such as between 1 and 40 wt% or between 1 and 25wt%, of the composition.

A yet a further embodiment refers to an article, such as a molded article, such as a three-dimensional article, obtainable by shaping, such as molding at least one cross-linkable aromatic polycarbonate as disclosed herein or at least one composition likewise disclosed herein. Preferably the cross-linkable aromatic polycarbonate in the article is cured, i.e. the polymer is cross-linked.

Cross-linking of the cross-linkable aromatic polycarbonate may be heat-initiated, upon and/or subsequent to said molding. The heat inducing the cross-linking reaction of the triple bonds may be provided externally or *in situ* generated

Further, the cross-linking may be enhanced by the presence of an effective amount of at least one compound promoting cross-linking reactions of acetylenic polymers, such as a sulphur or an organic sulphur derivative as disclosed in for instance US patent no. 6,344,523 and/or a radical initiator.

However, it is preferred if the cross-linking is initiated without having to provide a compound promoting cross-linking reactions of the cross-linkable aromatic polycarbonate. Such additional compounds may negatively affect the properties of the cross-linkable aromatic polycarbonate as well as of the cured polymer.

According to one embodiment, three-dimensional article is intended to mean an article, wherein the cross-section at any given axes, due to the molding process used, may be varied. Accordingly, such an embodiment does not encompass articles, such as fibers, having a constant diameter.

Articles as disclosed herein may be used as windscreens and other automotive parts, food containers, in personal protection equipment, medical equipments, mobile phones, electrical and electronics, storage media, such as compact discs and digital video discs, and in building industries. Such use is further elaborated below.

The cross-linkable aromatic polycarbonate may be formed, such as molded, into an article without initiating cross-linking. Furthermore, and importantly the cross-linkable aromatic polycarbonate may thus be processed without initiating cross-linking.

Accordingly, additives to a composition comprising an cross-linkable aromatic polycarbonate, such as fillers, stabilizer, plasticizer, lubricant, impact modifier, photo initiator and blowing, expanding and/or foaming agents, may be added and mixed with the an cross-linkable aromatic polycarbonate without initiating cross-linking.

According to one embodiment molding is intended to mean molding techniques in which the dimension along any given axes may be varied. This may be achieved by use of a mould with a cavity. Accordingly, such an embodiment encompasses injection molding, blow molding in a mould cavity and compression molding. However, such an embodiment does not encompass extrusion molding as the dimension along the longitudal axes not can be varied in extrusion molding. Cross-linking of the cross-linkable aromatic polycarbonate may be performed either directly within the mould or separately and subsequent to the molding.

According to one embodiment, cross-linking of the herein disclosed cross-linkable aromatic polycarbonate and/or the herein disclosed composition are advantageously initiated by providing the mould, the inlet or the hot-runner with a choking valve or check valve arrangement creating heat in the polymer through friction caused during the injection phase. The valve arrangement may be a solid arrangement whereas the generated heat is guided through the velocity of injection. There are numerous ways to guide the injection velocity.

One way to guide the velocity is through PLC (Programmable Logic Controller) used for guiding the injection molding parameters of most modem injection molding machines. The operator will then have to perform a series of trials where he in small steps increase the injection speed until the threshold temperature in the valve arrangement is sufficient to initiate the curing process. The valve arrangement is advantageously made adjustable for the same purpose.

Another way is to guide the process actively by using a temperature sensor in the mould and/or in the valve arrangement. A pressure sensor advantageously arranged just before the valve arrangement, optionally with a second pressure sensor arranged after the valve arrangement, may serve the same purpose as it indicates the pressure drop and thereby the friction generated. The temperature and pressure sensor(s) may also be used in combination. The data generated from these sensor(s) are then used as process data for guiding the injection molding cycle. This data may then be used for guiding the injection sequence through direct guiding or so-called statistical process guiding. Statistical process guiding is especially advantageous where there is a risk for measurement lag, data delay or process guiding resonance in the process.

It is also possible to design in such a way that choking portions in the mould itself will constitute a part of the article produced. It will in this way be possible to:
a) manufacture articles that due to its size or through very quick curing of used polymers otherwise would be impossible to manufacture, and/or,
b) manufacture articles wherein only certain portions are cured, while other portions have the properties of an uncured polymer.

It is furthermore possible to actively guide the orifice size of the check valve thus allowing the temperature profile to be guided through other means than only the injection speed. This can for example be achieved through means of a hydraulic actuator constantly adjusting the size of the opening through the check valve. This guiding can be performed through PLC data only or by the aid of measuring data in the mould and/or around the valve as described above.

The check valve may also be provided with guided heating and/or cooling, either as a replacement for mechanically adjusting the orifice size, or as a complement thereto. Also this can be guided through PLC data only or by the aid of measuring data in the mould and/or around the valve as described above.

The mould is advantageously provided with one or more temperature sensors for the purpose of detecting the exothermic heat caused by the curing process. It is suitable to arrange several such sensors along the flow path of the polymer in order to detect variations in the curing in different portions of the article produced. These measurements are suitably used for statistical process guiding.

Similar principles as described above may be used in extrusion molding. It will, as known for the skilled person, be easy to achieve a favorable temperature profile for the curing where the polymer material is first plasticized, then heated further in the extrusion mould to initiate the curing while the later portions of the extrusion mould will cool the article enough to keep its shape. The continuous nature of the process is well suited for the curing of the cross-linkable aromatic polycarbonate and/or the composition herein disclosed. Further heating is advantageously achieved by heating a predetermined portion of the extrusion mould by means of an external heat source. This will allow the operator to guide the curing process not having to rely completely on the extrusion velocity for heat generation.

The herein disclosed cross-linkable aromatic polycarbonate and the herein disclosed composition are also well suited for use in a compression molding process. A predetermined amount of polymeric material may be preheated to a temperature somewhat under the curing temperature and placed in an open mould. The mould is then closed so that the polymeric material is distributed in the mould as is the normal procedure in compression molding. The preheating, the mould temperature, the viscosity of the polymeric material and the compression pressure is adapted so that the friction and compression pressure will generate the heat needed to initiate the curing. Alternatively the compression molding tool is heated to a temperature that makes the curing reaction to be activated. It is also in a compression molding process advantageous to provide the mould with one or more temperature and/or pressure sensors for the purpose of detecting the exothermic reaction during the curing.

The herein disclosed cross-linkable aromatic polycarbonate and the herein disclosed composition may also be used to produce polymer film, such as films having a thickness of less than 500 µm, such as less than 300 µm. Thermoplastic films are typically obtained by extrusion followed by rolling. Curing of the film may be initiated during the rolling, such by use of heated rollers, heat radiation by IR or other source or convection heating. The film may also be baked or post-cured.

The viscosity of the polymeric material during processing may be altered by means of rheology modifiers in order to obtain desired process parameters.

The temperature at which cross-linking is initiated depends on the acetylenic compounds and the ratio at which it is present within the cross-linkable aromatic polycarbonate. As elaborated above, certain temperature intervals, with respect to the initiation of curing are preferred. The temperature at which curing is initiated should be low enough to minimize material break down of the polymer chain during curing. However, it should be high enough to allow processing without initiating cross-linking.

An embodiment relates to a cross-linkable aromatic polycarbonate which may be cross-linked at a temperature of between 150 and 360°C. As aromatic polycarbonates may be subject to thermal degradation at temperatures exceeding 300°C, it is preferred if the cross-linkable aromatic polycarbonate may be cross-linked below 300°C.

There is also the possibility to modify the curing temperatures by utilizing a catalyst or initiator as disclosed above. Said catalysts have proven to radically lower the curing initiation temperature. It is also possible to add coupling agents.

It is, according to one embodiment of the invention preferred to perform at least a portion of the curing after the molding process.

This may for example be performed through electron beam (EB) curing or ultraviolet (UV) curing. This will also call for the need of for instance one or more photo initiators. In most applications only a surface curing can be achieved through means of UV curing since the thermoplastic polymer is not transparent, however EB curing will be possible to utilize even for opaque polymers.

It is also possible to continue an initiated curing at a lower temperature. The article produced is here after the molding procedure placed in an oven for a period of time ranging from half an hour (30 minutes) to a several days, such as 3 days or more. This process is known as baking. In order to keep important portions of the article, such as the flange portion of an oil pan, within desired tolerances the article may be arranged on a jig during the curing process.

Curing of the surface may be performed through corona treatment or flash heating. It will through this process be possible to cure the surface of a produced article without softening the polymeric material.

The herein disclosed cross-linkable aromatic polycarbonate and composition are, due to the improved mechanical properties, such as improved thermal stability and E-modulus, allowing the cross-linkable aromatic polycarbonate and/or the composition to be used at higher temperatures and harsher conditions then possible with prior art polymers. Thus is well suited for manufacturing of a great number of articles.

Suitable and typical application areas will be found within, but not limited to, civilian and military transportation vehicles, such as cars, trucks, busses, motorcycles, trains, ships and aircrafts as well as recreational vehicles wherein for instance demands for weight reduction is an increasing demand.

Automotive, aeronautic and aerospace components suitably produced from the cross-linkable aromatic polycarbonate and/or the composition as disclosed herein comprise, but are not limited to, for instance exterior body panels and glazing, such as back lights, door panels, fenders, panoramic roofs, roof modules, tailgates, heat shields, armors and spall linings. Further suitable articles include exterior components, such as vent grilles, door handles, front grilles, mirror systems, roof racks, running boards, spoilers, tank flaps, wheel housings and wheel covers as well as traditional after market products. It is also possible to produce larger components for trucks, busses, ships and aircrafts. Said cross-linkable aromatic polycarbonate and/or said composition may furthermore be used in lighting, such as fog lamp lenses, reflectors and housings; headlamp bezels, housings, lenses and reflectors; lamp support brackets; projector lamp reflectors and holders; rear combination lamp housings, reflectors and lenses. These can be base coated, primed for painting, direct metalized and/or molded in color. The cross-linkable aromatic polycarbonate and/or the composition of the present invention may also be used for other structural as well as interior components, such as composite headliners, energy absorption systems, front end modules, instrument panels, interior trimmings, load floors, pedestrian energy absorption systems and storage bins, as well as parts suitable for motorcycles, such as no-paint parts, tanks, fairing, chassis, frames, luggage containers and racks, as well as motorcycle rider safety items, such as helmets and all sorts of shields. The cross-linkable aromatic polycarbonate and the composition herein disclosed may also be used in power train parts, such as air intake, automotive gears, wire coatings, brackets, electronic and electronic housings, fuel system components, pulleys, sensors, transmissions and transmission parts, and valve rocker covers as well as other components in vehicle engine bays wherein heat may render prior art polymers insufficient.

Further suitable application areas of the cross-linkable aromatic polycarbonate and/or the composition of the present invention include, but are not limited to, articles used in home entertainment, such as television apparatus and equipment, projectors and audio devices, as well as mobile entertainment and information carriers and communication devices. Further application areas include communication devices such as antennas, satellite dishes, articles and devices for recreation, entertainment and sport activities wherein for instance the weight to strength ratio is important, such as light weight components in extreme sport equipment including body protection, parts to mountain bikes, heat shields and the like. Further suitable applications include articles such as fishing rods and golf clubs.

A further industry having demands on higher mechanical strength, sometimes under elevated temperatures, is the packaging industry. The cross-linkable aromatic polycarbonate and/or the composition according to the present invention may solve a number of problems linked to medium to long term storage under for instance elevated temperatures. Furthermore, creep strain in polymers, which today is a problem calling for over-dimensioning of carrying structures made of polymeric materials, may be eliminated or reduced by use of the cross-linkable aromatic polycarbonate and/or the composition as disclosed herein.

It is also advantageous to utilize the cross-linkable aromatic polycarbonate and/or the composition herein disclosed in household, building and construction industry. Said cross-linkable aromatic polycarbonate and/or said composition may here be used for beams, girders, rails, panels, window frames and sub assemblies, roofing, flooring, doors and door frames, handles, knobs, cabinets, housings, kitchen appliances and central heating and energy recovery systems as well as for solar energy collectors and other parts of solar and wind energy and heating systems and equipment. Further application areas may be found among electrical components, equipment and installations, such as circuit breakers, films, flexible and rigid wire coatings, housings and discrete components.

The herein disclosed cross-linkable aromatic polycarbonate and/or composition may also be suitably for use in health care, including man and animal, and laboratory equipment such as cardiovascular and blood care equipment, oxygenators, filters, pumps, masks, sleep therapy equipment, drug delivery devices, inhales, syringes, injection devices, stopcocks and valves as well as orthopedic equipment, external bone fixation, joint trials, mechanical instruments, surgical instruments, electrosurgical instruments, endomechanical instruments and access devices as well as sub components and spare parts to the above.

The cross-linkable aromatic polycarbonate and/or said composition may furthermore be used for supporting, diagnostic and monitoring equipment, such as hand instruments, equipment for imaging, ocular devices, dental devices, laboratory ware and vials as well as sterilization trays.

Without further elaboration, it is believed that one skilled in the art can, using the preceding description, utilize the present invention to its fullest extent. The following preferred specific embodiments are, therefore, to be construed as merely illustrative and not limitative of the remainder of the disclosure in any way whatsoever.

Although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc do not preclude a plurality.

### Experimental

The following examples are mere examples and should by no mean be interpreted to limit the scope of the invention. Rather, the invention is limited only by the accompanying claims.

### Synthetic schemes

In addition to the specific examples given below, schemes 1 and 2, depict examples of synthetic routes useful to obtain acetylenic compounds as disclosed herein.

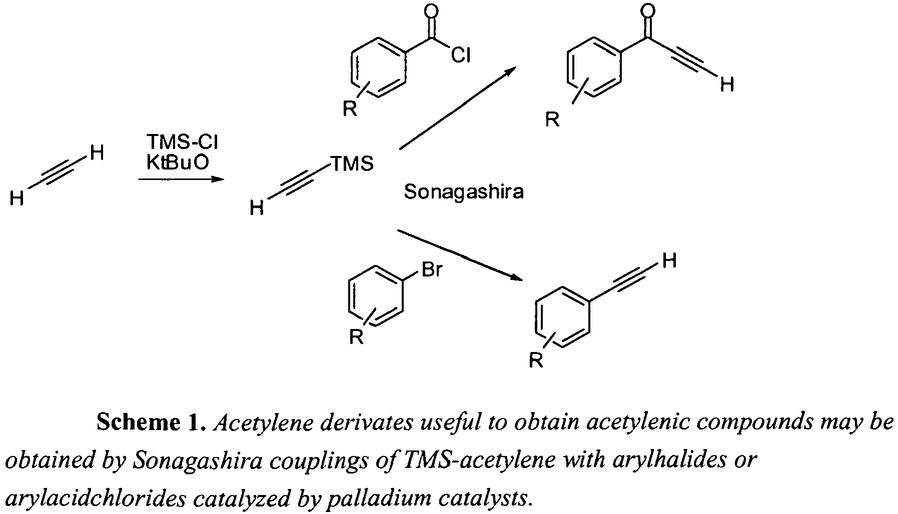

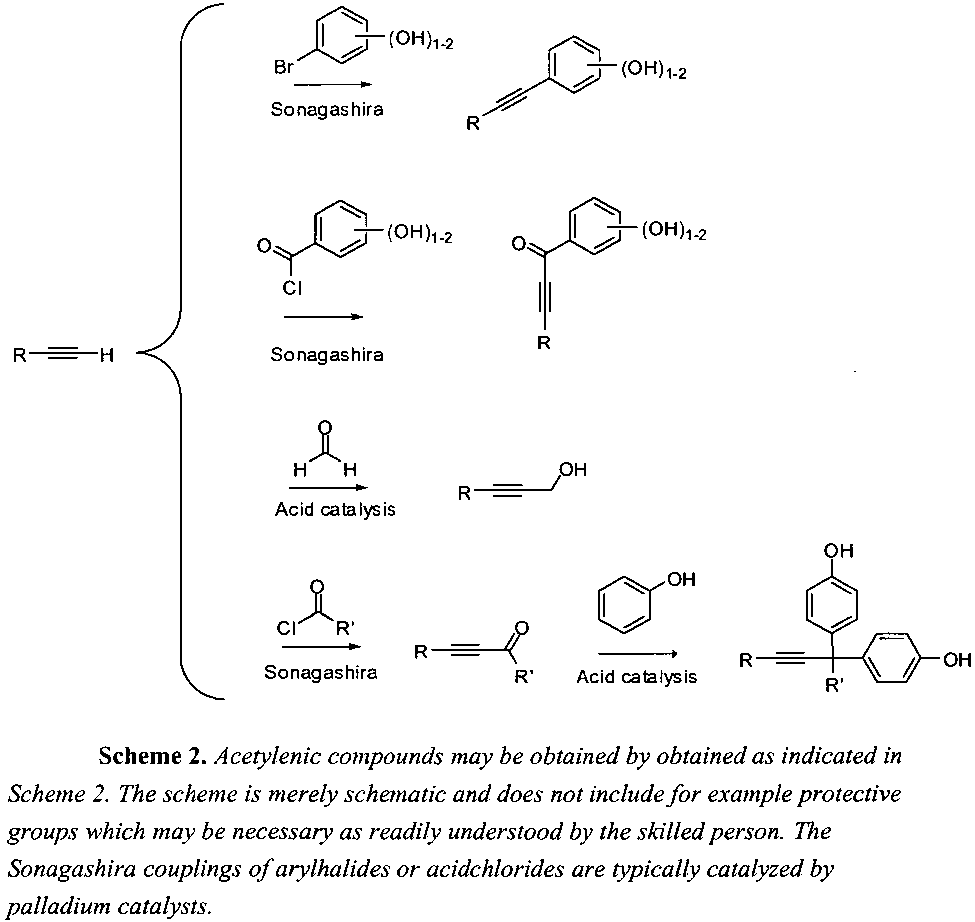

### Specific examples

All starting materials were obtained from commercial sources, unless not stated otherwise, and were used without further purification unless otherwise noted

### Acetylated dihydroxybenzoic acid

3,5-Dihydroxybenzoic acid (500 g, 3.24 mol) and acetic anhydride (716.8 g, 7.0 mol) were mixed and heated to reflux in a 2L glass reactor for 78 hours. The reaction mixture was allowed to cool down slowly during which toluene was added (500 mL) drop wise and the mixture was left overnight. Solid material was filtered off, washed with toluene (3 x 200) and dried at 50°C over vacuum (50 mbar) to give 389 g of 3,5-diacetoxybenzoic acid as white crystals (50.4 % yield).

### Acetylated PEKR ([3-acetoxy-5-(3-phenylprop-2-ynoyl)phenyl])

3,5-diacetoxybenzoic acid (150 g, 0.63), thionylchloride (415.3g, 3.15 mol) and dimethylformamide (0.5 mL) were mixed and heated to 50°C in a 2L glass reactor over nitrogen for 160 minutes. Excess of reagents were distilled off at 75°C and then toluene (3x250 mL) was added and distilled off in several cycles to form 1,3-diacetoxy-5-chlorocarbonyl-phenyl as a solid material. To the solid material was then added phenylacetylene (64.0 g, 0,63), triethylamine (114g, 1.1 mol) and toluene. The resulting mixture was heated to 70°C over nitrogen. Palladiumacetate (0.28 g, 0.001 mol) was added and the mixture was allowed to react for 4.5 hours. Precipitate formed during reaction was filtered off and the solution was filtered through a plug of silica gel (0.063-0.200 mm, approx. 1 cm layer) and concentrated on a rota vapour to give 175g (98% yield) of [3-acetoxy-5-(3-phenylprop-2-ynoyl)phenyl] acetate as a brown solid product.

### PEKR (1-(3,5-dihydroxyphenyl)-3-phenyl-prop-2-yn-1-one)

100 ml of 3M HC1 (aq) was added to a solution of [3-acetoxy-5-(3-phenylprop-2-ynoyl)phenyl] acetate (50 g, 0.155 mol) and 250 ml acetone. Mixture was refluxed during 7 hours, whereupon a sodium bicarbonate solution (26 g in 280 ml of water) was added. Acetone was distilled under reduced pressure, whereupon 200 ml of ethyl acetate was added. The organic phase was separated, and aqueous phase extracted with additional 150 ml of ethyl acetate. 400 ml of heptane was added to the combined organic phase, and the resulting mixture passed through a filter of 160 g silica gel 60 (0.063-0.200 mm). Solvents were evaporated under vacuum to yield PEKR (1-(3,5-dihydroxyphenyl)-3-phenyl-prop-2-yn-1-one, 16 g, 0.078 mol). The obtained PEKR was analysed by LC-MS (Column: C18/3µm/150mm/2,1mm; Mobile phase: H₂O/MeOH 25/75 + 0,1 % AcOH; Flow: 0,1 ml/min). The retention factor was found to be 0,33 and the mass was found to be 239, corresponding to M+H, and 267, corresponding to M+Na.

### Reference - Non-cross-linkable aromatic polycarbonate

Bisphenol A (60 g, 0.26 mol), triethylamine (0.26 g, 0.003 mol), distilled water (300 mL) and dichloromethane (350 mL) were mixed and cooled to 15°C over nitrogen (g). Sodium hydroxide (59 g, 50 weight % NaOH in water) was added drop wise to the mixture during 20 minutes and one minute after the start of sodium hydroxide addition phosgene (143 g, 20% in toluene) was simultaneously added during 25 minutes. The reaction mixture was heated to 35°C for 20 minutes and was then allowed to cool down to room temperature. The reaction mixture was washed with 300 mL HCl (5 wt%), washed with distilled water (2x300 mL) and dried under vacuum at 100°C for 48 hours to give an aromatic polycarbonate as a solid product (32.4 g).

### Example 1 - Cross-linkable aromatic polycarbonate (in chain / end capped)

Bisphenol A (7.5 g, 33 mmol), butyn-1,4-diol (0.75 g, 9 mmol), propargyl alcohol (0.034 g, 0.6 mmol), triethylamine (10.08 g, 130 mmol) and 275 ml dichloromethane were mixed and cooled to 12°C. Phosgene (20.62 g 20% toluene solution, 42 mmol) was added dropwise during 20 min, whereupon the mixture was heated to 35°C and stirred 15 h. The mixture was cooled to room temperature, and 850 ml of methanol was added during 10 min. The resulting suspension was stirred 10 min and filtrated. The resulting solid was washed with 200 ml methanol, 200 ml water and 100 ml methanol. The product was dried under vacuum at 100°C during 48 hours, to yield 5.4 g of a white cross-linkable aromatic polycarbonate having carbon-carbon triple bonds as part of end-capping groups as well as in the polymer back bone.

### Example 2 - Cross-linkable aromatic polycarbonate (pendant / end capped)

Bisphenol A (60 g, 0.26 mol), triethylamine (0.26 g, 0.003 mol), ethynyl phenol (0.42 g 0.004 mol), PEKR (6.26 g, 0.026 mol), distilled water (300 mL) and dichloromethane (350 mL) were mixed and cooled to 15°C over nitrogen (g). Sodium hydroxide (60 g, 50 weight % NaOH in water) was added drop wise to the mixture during 12 minutes and one minute after the start of sodium hydroxide addition, phosgene (149 g, 20% in toluene) was simultaneously added during 18 minutes. The reaction mixture was heated to 35°C for 80 minutes and was allowed to cool down over night. Methanol (2L) was added to form precipitate which was filtered, washed with 300 mL HCl (5 wt%), with water (2x300 mL) and methanol (200 mL) and dried under vacuum at 100°C for 48 hours to give 50.4 g of a cross-linkable aromatic polycarbonate having carbon-carbon triple bonds as part of pendant groups as well as in the polymer back bone.

The glass transition temperature, the temperature at which cross-linking is initiated, and the thermal labiality of the reference, example 1 and example 2, respectively, were analysed by DSC and TGA.

### DSC-measurements

Instrument: TA-Instruments DSC Q2000. Sample amount: 2-10 mg.

### Method

a. Equilibrate at 40°C
b. Ramp 20°C/min to 500°C.

### TGA-measurements

Instrument: TA-Instruments TGA Q50. Sample amount: 5-20 mg.

### Method

Ramp 20°C/min to 550°C

The results of the measurements are indicated in table 1 below.

**Table 1**

| | Tg (deg C) | Onset | TGA (10%wt loss) |
|---|---|---|---|
| Reference | 149 | 0 | 400 |
| Ex.1 | 94 | 282 | 406 |
| Ex. 2 | 123 | 332 | 393 |

As seen from table 1 both example 1 and 2 were found to be cross-linkable. Further, the may be cross-linked at a temperature well below the temperature at which noticeable thermal degradation occurs.

### Cross-linkable aromatic polycarbonate (end-capped)

98.5 parts by weight of bisphenol A, 101.4 parts by weight of diphenyl carbonate and 11.1 parts by weight of 4-phenylethynyl phenol were charged in a reaction vessel equipped with a mechanical stirrer, nitrogen inlet and a distillation system. The mixture was heated to 200°C and 0.19 parts by weight of lanthanum (III) acetyl acetonate hydrate was to the molten reaction mixture added as catalyst. Vacuum of 25-100 mbar was applied after 45 minutes to enhance removal of phenol formed in the reaction and the temperature was now during 2 hours gradually raised to 260°C. The pressure was reduced to 4-10 mbar and the reaction mixture was kept at 260°C for a further 65 minutes. The reaction mixture was finally cooled to room temperature to yield a aromatic polycarbonate having a molecular weight of more than 9700 g/mole (GPC) and a monomer content of less than 1 m/m % (LC).

## Claims

1. A cross-linkable aromatic polycarbonate comprising at least three carbon-carbon triple bonds, wherein
said cross-linkable aromatic polycarbonate is obtainable by co-polymerization of at least one aromatic diol, at least one carbon dioxide source and at least two different acetylenic compounds, wherein said at least two different acetylenic compounds comprise one acetylenic compound comprising one residue represented by -OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, and at least one triple bond, and one acetylenic compound comprising two residues represented by OR27, wherein R27 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, and at least one triple bond, wherein the ratio between said acetylenic compounds and said aromatic diol in said co-polymerization is lower than 1:1; and wherein said aromatic diol is distinct from said acetylenic compounds;
said cross-linkable aromatic polycarbonate comprises at least one carbon-carbon triple bond as part of a pendant group, or at least one carbon-carbon triple bond within the polymer back bone; and at least one carbon-carbon triple bond as part of an end-capping group; and
said two different acetylenic compounds are respectively selected from compounds according to formula II, or VII 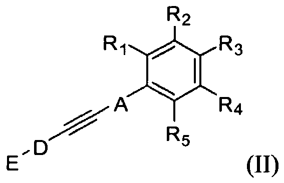 wherein
R1 and R5 are independently selected from the group consisting of hydrogen, hydroxy, OC(O)R21, wherein R21 is OC1-C4 alkyl, OPhenyl, OBenzyl, NHC1-C4 alkyl, NHPhenyl, NHBenzyl, or chlorine, C1-C4 alkyl, such as methyl and tert-butyl, CF3 and a residue according to formula (III);
R2 to R4 are independently selected from the group consisting of hydrogen, hydroxy, OC(O)R22, wherein R22 is OC1-C4 alkyl, OPhenyl, OBenzyl, NHC1-C4 alkyl, NHPhenyl, NHBenzyl, or chlorine, and a residue according to formula (III);
"A" is a direct bond, C(O), SO2 or CH2;
"D" is a direct bond, C(O), SO2 or CH2;
"E" is selected from the group consisting of hydrogen, C1-4 alkyl, such as methyl, ethyl and tert-butyl, and a residue according to formula (IV);
Formula (III) is a residue as depicted below 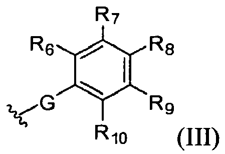 wherein
R6 to R10 are independently selected from the group consisting of hydrogen, hydroxy, and OC(O)R23, wherein R23 is OC1-C4 alkyl, OPhenyl, OBenzyl, NHC1-C4 alkyl, NHPhenyl, NHBenzyl, or chlorine;
"G" is a direct bond, C(O), O, SO2, CH2, C(CH3)2, or C(CF3)2; and
the waved line indicates the point of attachment;
Formula (IV) is a residue as depicted below 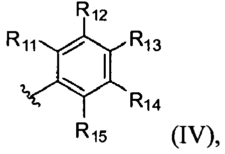 wherein
R11 and R15 are independently selected from the group consisting of hydrogen, hydroxy, OC(O)R24, wherein R24 is OC1-C4 alkyl, OPhenyl, OBenzyl, NHC1-C4 alkyl, NHPhenyl, NHBenzyl, or chlorine, C1-C4 alkyl, such as methyl and tert-butyl, CF3 and a residue according to formula (V);
R12 to R14 are independently selected from the group consisting of hydrogen, hydroxy, OC(O)R25, wherein R25 is OC1-C4 alkyl, OPhenyl, OBenzyl, NHC1-C4 alkyl, NHPhenyl, NHBenzyl, or chlorine, and a residue according to formula (V); and
the waved line indicates the point of attachment;
Formula (V) is a residue as depicted below 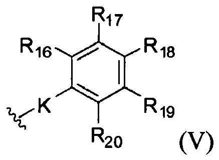 wherein
R16 to R20 are independently selected from the group consisting of hydrogen, hydroxy, and OC(O)R26, wherein R26 is OC1-C4 alkyl, OPhenyl, OBenzyl, NHC1-C4 alkyl, NHPhenyl, NHBenzyl, or chlorine;
"K" is a direct bond, C(O), O, SO2, CH2, C(CH3)2, or C(CF3)2; and
the waved line indicates the point of attachment; 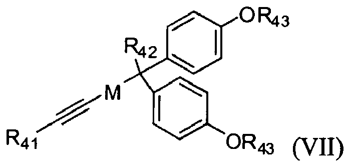 wherein
M is a direct bond, CH2, or phenylene;
R41 is hydrogen, C1-C4 alkyl or phenyl;
R42 is hydrogen, methyl, CF3, phenyl or a residue according to formula (VIII) 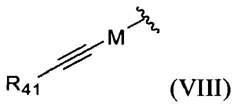 wherein M and R41 are as disclosed above for formula (VII);
the waved line indicates the point of attachment; and
R43 is hydrogen, C(O)OC1-C4 alkyl, C(O)OPhenyl, C(O)OBenzyl, C(O)NHC1-C4 alkyl, C(O)NHPhenyl, C(O)NHBenzyl, or C(O)Cl, or from compounds according to the group consisting of 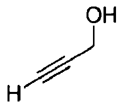 and

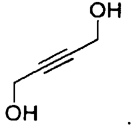

2. The cross-linkable aromatic polycarbonate according to claim 1, wherein R27 is hydrogen.

3. The cross-linkable aromatic polycarbonate according to any of the claims 1 or 2, wherein "D" is a direct bond.

4. The cross-linkable aromatic polycarbonate according to any of the claims 1 to 3, wherein R1 and R5 are hydrogen, and R6, R10, R11, R15, R16 and R20, if present, are hydrogen.

5. The cross-linkable aromatic polycarbonate according to any of the claims 1 to 4, wherein "E" is selected from the group consisting of hydrogen and a residue according to formula (IV).

6. The cross-linkable aromatic polycarbonate according to any of the claims 1 to 5, wherein R2 and R4, in one of said at least two different acetylenic compounds, are residues according to formula (III), wherein one of R7 to R9 in both R2 and R4 are hydroxy, OC(O)OC1-C4 alkyl, OC(O)OPhenyl, OC(O)OBenzyl, OC(O)NHC1-C4 alkyl, OC(O)NHPhenyl, OC(O)NHBenzyl, or OC(O)Cl, the other two being hydrogen; and/or "E" and "D" are selected such that one of said at least two different acetylenic compounds is symmetrical with respect to the triple bond.

7. The cross-linkable aromatic polycarbonate according to any of the claims 1 to 6, wherein, in one of said at least two different acetylenic compounds, R1 and R5 are hydrogen, one of R2 to R4 is hydroxy, OC(O)OC1-C4 alkyl, OC(O)OPhenyl, OC(O)OBenzyl, OC(O)NHC1-C4 alkyl, OC(O)NHPhenyl, OC(O)NHBenzyl, OC(O)Cl, or a residue according to formula (III), wherein R6 and R10 are hydrogen, one of R7 to R9 is hydroxy, or OC(O)R23, wherein R23 is OC1-C4 alkyl, OPhenyl, OBenzyl, NHC1-C4 alkyl, NHPhenyl, NHBenzyl, or chlorine, and the other two of R7 to R9 being hydrogen, and the other two of R2 to R4 being hydrogen.

8. The cross-linkable aromatic polycarbonate according to any of the claims 1 to 7, wherein "A", "D", "E", "G", and "K", if present, are independently selected from the group consisting of a direct bond and C(O).

9. The cross-linkable aromatic polycarbonate according to any of the claims 1 to 8, wherein the acetylenic compounds are selected from the group consisting of:

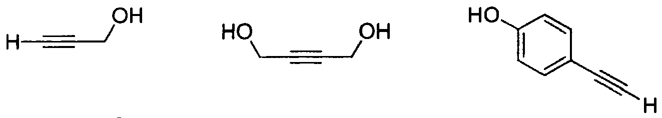

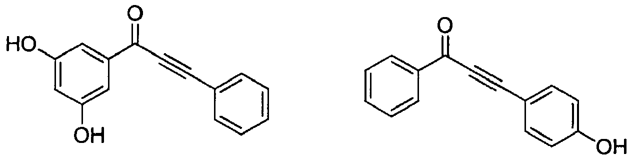

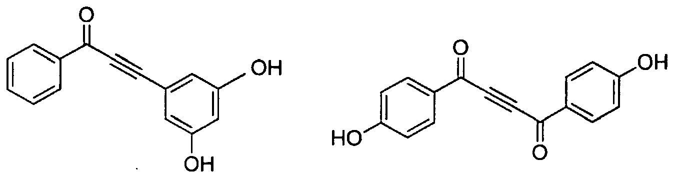

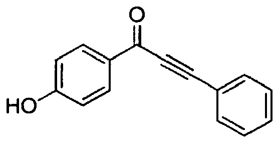

10. The cross-linkable aromatic polycarbonate according to any of the claims 1 to 9, wherein said aromatic diol is a diol according to formula (IX) 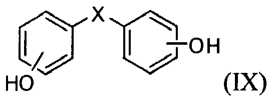 wherein X is a direct bond, C(CH₃)₂, CH₂, C(CF₃)₂, C(O), O or SO₂.

11. The cross-linkable aromatic polycarbonate according to any of the claims 1 to 10, wherein the ratio between said acetylenic compound and said aromatic diol in the co-polymerization is higher than 1:50, but lower than 1:2.

12. The cross-linkable aromatic polycarbonate according to any of the claims 1 to 11, wherein said carbon dioxide source is phosgene, urea, dimethylcarbonate, diethylcarbonate, diphenylcarbonate, bis-allylcarbonate, N, N'-dimethylurea, N, N'-diethylurea, N-ethylurea, N-phenyl-N'-ethylurea, or a compound according to formula XII, 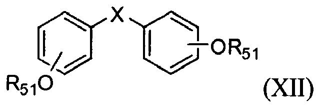 wherein X is direct bond, C(CH₃)₂, CH₂, C(CF₃)₂, C(O), O or SO₂; and
R51 is C(O)Cl, C(O)NH2, C(O)OMethyl, or C(O)OEthyl.

13. The cross-linkable aromatic polycarbonate according to any of the claims 1 to 12, having a weight average molecular weight (M_{w}) of 30 000 or less.

14. A composition, wherein said composition comprises between 0.1 and 99.9% by weight of the cross-linkable aromatic polycarbonate according to any of the claims 1 to 13, and a filler, a stabilizer, a fiber, a plasticizer, a lubricant, an impact modifier, an insulation modifier, a blowing, expanding or foaming agent, a tackifier, pigment, and/or an additional polymer, such as an aromatic polycarbonate.

15. An article obtainable by shaping at least one cross-linkable aromatic polycarbonate according to any of the claims 1 to 13 or at least one composition according to claim 14, wherein said cross-linkable aromatic polycarbonate has been cross-linked.

## Patentansprüche

1. Vernetzbares aromatisches Polycarbonat, umfassend mindestens drei Kohlenstoff-Kohlenstoff Dreifachbindungen, wobei
das vernetzbare aromatische Polycarbonat durch Co-Polymerisation von mindestens einem aromatischen Diol, mindestens einer Kohlendioxidquelle und mindestens zwei unterschiedlichen acetylenischen Verbindungen erhältlich ist, wobei die mindestens zwei unterschiedlichen acetylenischen Verbindungen eine acetylenische Verbindung umfassen, umfassend einen Rest, dargestellt durch - OR27, wobei R27 Wasserstoff, C(O)OC1-C4-Alkyl, C(O)OPhenyl, C(O)OBenzyl, C(O)NHC1-C4-Alkyl, C(O)NHPhenyl, C(O)NHBenzyl, oder C(O)Cl ist, und mindestens eine Dreifachbindung, und eine acetylenische Verbindung, umfassend zwei Reste, dargestellt durch OR27, wobei R27 Wasserstoff, C(O)OC1-C4-Alkyl, C(O)OPhenyl, C(O)OBenzyl, C(O)NHC1-C4-Alkyl, C(O)NHPhenyl, C(O)NHBenzyl, oder C(O)Cl ist, und mindestens eine Dreifachbindung, wobei das Verhältnis zwischen den acetylenischen Verbindungen und dem aromatischen Diol in der Co-Polymerisation niedriger als 1:1 ist; und wobei sich das aromatische Diol von den acetylenischen Verbindungen unterscheidet;
das vernetzbare aromatische Polycarbonat mindestens eine Kohlenstoff-Kohlenstoff Dreifachbindung als Teil einer Anhangsgruppe, oder mindestens eine Kohlenstoff-Kohlenstoff Dreifachbindung innerhalb des Polymerrückgrats; und mindestens eine Kohlenstoff-Kohlenstoff Dreifachbindung als Teil einer Endkappengruppe umfasst; und
die zwei unterschiedlichen acetylenischen Verbindungen jeweils ausgewählt sind von Verbindungen gemäß Formel II oder VII 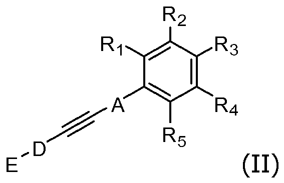 wobei
R1 und R5 unabhängig ausgewählt sind aus der Gruppe bestehend aus Wasserstoff, Hydroxy, OC(O)R21, wobei R21 OC1-C4-Alkyl, OPhenyl, OBenzyl, NHC1-C4-Alkyl, NHPhenyl, NHBenzyl, oder Chlor ist, C1-C4-Alkyl, wie Methyl und tert-Butyl, CF3 und ein Rest gemäß Formel (III);
R2 bis R4 unabhängig ausgewählt sind aus der Gruppe bestehend aus Wasserstoff, Hydroxy, OC(O)R22, wobei R22 OC1-C4-Alkyl, OPhenyl, OBenzyl, NHC1-C4-Alkyl, NHPhenyl, NHBenzyl, oder Chlor, und einem Rest gemäß Formel (III);
"A" eine direkte Bindung, C(O), SO2 oder CH2;
"D" eine direkte Bindung, C(O), SO2 oder CH2;
"E" ausgewählt ist aus der Gruppe bestehend aus Wasserstoff, C1-4-Alkyl, wie Methyl, Ethyl und tert-Butyl, und einem Rest gemäß Formel (IV);
Formel (III) ein wie nachstehend abgebildeter Rest ist 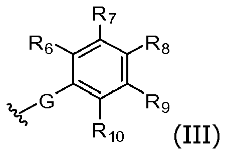 wobei
R6 bis R10 unabhängig ausgewählt sind aus der Gruppe bestehend aus Wasserstoff, Hydroxy, und OC(O)R23, wobei R23 OC1-C4-Alkyl, OPhenyl, OBenzyl, NHC1-C4-Alkyl, NHPhenyl, NHBenzyl, oder Chlor ist;
"G" eine direkte Bindung, C(O), O, SO2, CH2, C(CH3)2, oder C(CF3)2 ist; und die gewellte Linie den Anbindungspunkt anzeigt;
Formel (IV) ein wie nachstehend abgebildeter Rest ist 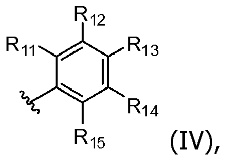 wobei
R11 und R15 unabhängig ausgewählt sind aus der Gruppe bestehend aus Wasserstoff, Hydroxy, OC(O)R24, wobei R24 OC1-C4-Alkyl, OPhenyl, OBenzyl, NHC1-C4-Alkyl, NHPhenyl, NHBenzyl, oder Chlor ist, C1-C4-Alkyl, wie Methyl und tert-Butyl, CF3 und einem Rest gemäß der Formel (V);
R12 bis R14 unabhängig ausgewählt sind aus der Gruppe bestehend aus Wasserstoff, Hydroxy, OC(O)R25, wobei R25 OC1-C4-Alkyl, OPhenyl, OBenzyl, NHC1-C4-Alkyl, NHPhenyl, NHBenzyl, oder Chlor ist, und einem Rest gemäß Formel (V); und
die gewellte Linie den Anbindungspunkt anzeigt;
Formel (V) ein wie nachstehend abgebildeter Rest ist 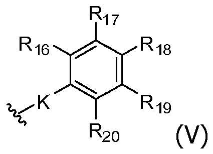 wobei
R16 bis R20 unabhängig ausgewählt sind aus der Gruppe bestehend aus Wasserstoff, Hydroxy, und OC(O)R26, wobei R26 OC1-C4-Alkyl, OPhenyl, OBenzyl, NHC1-C4-Alkyl, NHPhenyl, NHBenzyl, oder Chlor ist;
"K" eine direkte Bindung, C(O), O, SO2, CH2, C(CH3)2, oder C(CF3)2 ist; und die gewellte Linie den Anbindungspunkt anzeigt; 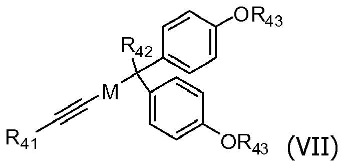 wobei
M eine direkte Bindung, CH2, oder Phenylen ist;
R41 Wasserstoff, C1-C4-Alkyl oder Phenyl ist;
R42 Wasserstoff, Methyl, CF3, Phenyl oder ein Rest gemäß Formel (VIII) ist 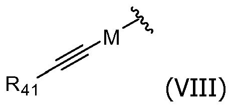 wobei M und R41 wie vorstehend für Formel (VII) offenbart sind;
die gewellte Linie den Anbindungspunkt anzeigt; und
R43 Wasserstoff, C(O)OC1-C4-Alkyl, C(O)OPhenyl, C(O)OBenzyl, C(O)NHC1-C4-Alkyl, C(O)NHPhenyl, C(O)NHBenzyl, oder C(O)Cl ist, oder von Verbindungen
gemäß der Gruppe bestehend aus 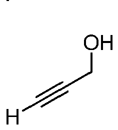 und

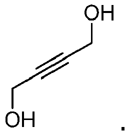

2. Vernetzbares aromatisches Polycarbonat nach Anspruch 1, wobei R27 Wasserstoff ist.

3. Vernetzbares aromatisches Polycarbonat nach einem beliebigen der Ansprüche 1 oder 2, wobei "D" eine direkte Bindung ist.

4. Vernetzbares aromatisches Polycarbonat nach einem beliebigen der Ansprüche 1 bis 3, wobei R1 und R5 Wasserstoff sind, und R6, R10, R11, R15, R16 und R20, falls vorhanden, Wasserstoff sind.

5. Vernetzbares aromatisches Polycarbonat nach einem beliebigen der Ansprüche 1 bis 4, wobei "E" ausgewählt ist aus der Gruppe bestehend aus Wasserstoff und einem Rest gemäß Formel (IV).

6. Vernetzbares aromatisches Polycarbonat nach einem beliebigen der Ansprüche 1 bis 5, wobei R2 und R4, in einem der mindestens zwei unterschiedlichen acetylenischen Verbindungen, Reste gemäß Formel (III) sind, wobei einer von R7 bis R9 in sowohl R2 als auch R4 Hydroxy, OC(O)0OC1-C4-Alkyl, OC(O)OPhenyl, OC(O)OBenzyl, OC(O)NHC1-C4-Alkyl, OC(O)NHPhenyl, OC(O)NHBenzyl, oder OC(O)Cl sind, wobei die anderen beiden Wasserstoff sind; und/oder "E" und "D" so ausgewählt sind, dass eine der mindestens zwei unterschiedlichen acetylenischen Verbindungen in Bezug auf die Dreifachbindung symmetrisch ist.

7. Vernetzbares aromatisches Polycarbonat nach einem beliebigen der Ansprüche 1 bis 6, wobei in einer der mindestens zwei unterschiedlichen acetylenischen Verbindungen R1 und R5 Wasserstoff sind, einer von R2 bis R4 Hydroxy, OC(O)OC1-C4-Alkyl, OC(O)OPhenyl, OC(O)OBenzyl, OC(O)NHC1-C4-Alkyl, OC(O)NHPhenyl, OC(O)NHBenzyl, OC(O)Cl, oder ein Rest gemäß Formel (III) ist, wobei R6 und R10 Wasserstoff sind, einer von R7 bis R9 Hydroxy oder OC(O)R23 ist, wobei R23 OC1-C4-Alkyl, OPhenyl, OBenzyl, NHC1-C4-Alkyl, NHPhenyl, NHBenzyl, oder Chlor ist, und die zwei anderen von R7 bis R9 Wasserstoff sind, und die anderen zwei von R2 bis R4 Wasserstoff sind.

8. Vernetzbares aromatisches Polycarbonat nach einem beliebigen der Ansprüche 1 bis 7, wobei "A", "D", "E", "G", und "K", falls vorhanden, unabhängig ausgewählt sind aus der Gruppe bestehend aus einer direkten Bindung und C(O).

9. Vernetzbares aromatisches Polycarbonat nach einem beliebigen der Ansprüche 1 bis 8, wobei die acetylenischen Verbindungen ausgewählt sind aus der Gruppe bestehend aus:

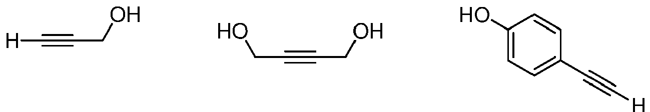

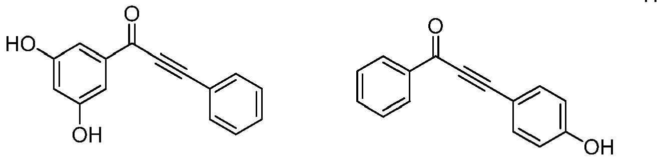

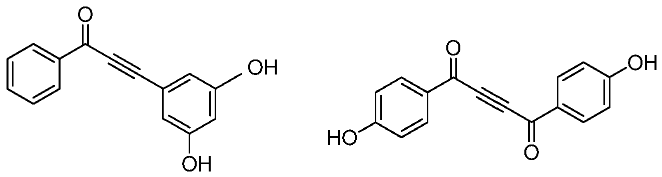

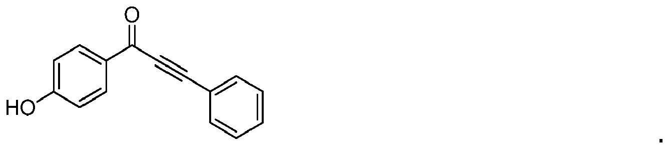

10. Vernetzbares aromatisches Polycarbonat nach einem beliebigen der Ansprüche 1 bis 9, wobei das aromatische Diol ein Diol gemäß Formel (IX) ist 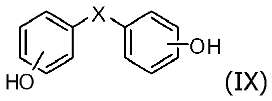 wobei X eine direkte Bindung, C(CH₃)₂, CH₂, C(CF₃)₂, C(O), O oder SO₂ ist.

11. Vernetzbares aromatisches Polycarbonat nach einem beliebigen der Ansprüche 1 bis 10, wobei das Verhältnis zwischen der acetylenischen Verbindung und dem aromatischen Diol in der Polymerisation höher ist als 1:50, aber niedriger als 1:2.

12. Vernetzbares aromatisches Polycarbonat nach einem beliebigen der Ansprüche 1 bis 11, wobei die Kohlendioxidquelle Phosgen, Harnstoff, Dimethylcarbonat, Diethylcarbonat, Diphenylcarbonat, bis-Allylcarbonat, N,N'-Dimethyharnstoff, N,N'-Diethylharnstoff, N-Ethylharnstoff, N-Phenyl-N'-ethylharnstoff, oder eine Verbindung gemäß der Formel XII ist, 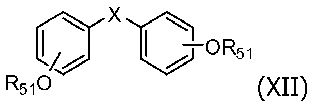 wobei X eine direkte Bindung, C(CH₃)₂, CH₂, C(CF₃)₂, C(O), O oder SO₂ ist; und R51 C(O)Cl, C(O)NH2, C(O)OMethyl, oder C(O)OEthyl ist.

13. Vernetzbares aromatisches Polycarbonat nach einem beliebigen der Ansprüche 1 bis 12 mit einem gewichtsgemittelten Molekulargewicht (M_{w}) von 30 000 oder weniger.

14. Zusammensetzung, wobei die Zusammensetzung zwischen 0,1 und 99,9 Gew.-% des vernetzbaren aromatischen Polycarbonats gemäß einem beliebigen der Ansprüche 1 bis 13 umfasst, und einen Füllstoff, einen Stabilisator, eine Faser, einen Weichmacher, einen Schmierstoff, einen Schlagzähigkeitsmodifikator, einen Dämmungsmodifikator, ein treibendes, expandierendes oder schäumendes Mittel, einen Klebrigmacher, Pigment, und/oder ein zusätzliches Polymer, wie ein aromatisches Polycarbonat.

15. Artikel, erhältlich durch Formen mindestens eines vernetzbaren aromatischen Polycarbonats gemäß einem beliebigen der Ansprüche 1 bis 13 oder mindestens einer Zusammensetzung gemäß Anspruch 14, wobei das vernetzbare aromatische Polycarbonat vernetzt wurde.

## Revendications

1. Polycarbonate aromatique réticulable comprenant au moins trois triples liaisons carbone-carbone, dans lequel
ledit polycarbonate aromatique réticulable peut être obtenu par co-polymérisation d'au moins un diol aromatique, d'au moins une source de dioxyde de carbone et d'au moins deux composés acétyléniques différents, dans lesquels lesdits au moins deux composés acétyléniques différents comprennent un composé acétylénique comprenant un résidu représenté par -OR27, dans lequel R27 est un atome d'hydrogène, un groupe C(O)O(alkyle en C1-C4), C(O)OPhényle, C(O)OBenzyle, C(O)NH(alkyle en C1-C4), C(O)NHPhényle, C(O)NHBenzyle, ou C(O)Cl, et au moins une triple liaison, et un composé acétylénique comprenant deux résidus représentés par OR27, dans lequel R27 est un hydrogène, un groupe C(O)O(alkyle en C1-C4), C(O)OPhényle, C(O)OBenzyle, C(O)NH(alkyle en C1-C4), C(O)NHPhényle, C(0)NHBenzyle, ou C(O)Cl, et au moins une triple liaison, dans lequel le rapport entre lesdits composés acétyléniques et ledit diol aromatique dans ladite co-polymérisation est inférieur à 1:1, et dans lequel ledit diol aromatique est distinct desdits composés acétyléniques ;
ledit polycarbonate aromatique réticulable comprend au moins une triple liaison carbone-carbone en tant que partie d'un groupement pendant, ou au moins une triple liaison carbone-carbone à l'intérieur du squelette du polymère ; et au moins une triple liaison carbone-carbone en tant que partie d'un groupe de coiffage d'extrémité ; et
lesdits deux composés acétyléniques différents sont choisis respectivement parmi les composés répondant à la formule II, ou VII 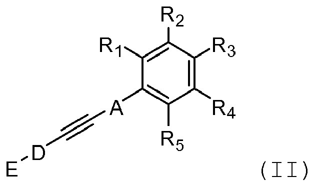 dans laquelle
R1 et R5 sont indépendamment choisis dans le groupe constitué par un atome d'hydrogène, un groupe hydroxy, OC(O)R21, dans lequel R21 est un groupe O(alkyle en C1-C4), OPhényle, OBenzyle, NH(alkyle en C1-C4), NHPhényle, NHBenzyle, ou un atome de chlore, un groupe alkyle en C1-C4, tel que le méthyle et le tert-butyle, CF3 et un résidu répondant à la formule (III) ;
R2 à R4 sont indépendamment choisis dans le groupe constitué par un atome d'hydrogène, un groupe hydroxy, OC(O)R22, dans lequel R22 est un groupe O(alkyle en C1-C4), OPhényle, OBenzyle, NH(alkyle en C1-C4), NHPhényle, NHBenzyle, ou un atome de chlore, et un résidu répondant à la formule (III) ;
« A » est une liaison directe, C(O), S02 ou CH2 ;
« D » est une liaison directe, C(O), S02 ou CH2 ;
« E » est choisi dans le groupe constitué par un atome d'hydrogène, un groupe alkyle en C1-4, tel que le méthyle, l'éthyle et le tert-butyle, et un résidu répondant à la formule (IV) ;
La formule (III) est un résidu tel que représenté ci-dessous 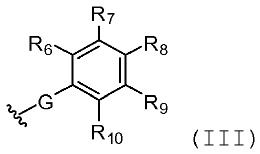 dans laquelle
R6 à R10 sont indépendamment choisis dans le groupe constitué par un atome d'hydrogène, un groupe hydroxy, et OC(O)R23, dans lequel R23 est un groupe O(alkyle en C1-C4), OPhényle, OBenzyle, NH(alkyle en C1-C4), NHPhényle, NHBenzyle, ou un atome de chlore ;
« G » est une liaison directe, C(O), O, SO2, CH2, C(CH3)2, ou C(CF3)2 ; et
la ligne ondulée indique le point d'attache ;
la formule (IV) est un résidu tel que représenté ci-dessous 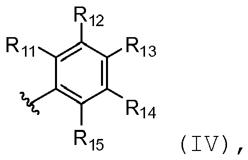 dans laquelle
R11 et R15 sont choisis indépendamment dans le groupe constitué par un atome d'hydrogène, un groupe hydroxy, OC(O)R24, dans lequel R24 est un groupe O(alkyle en C1-C4), OPhényle, OBenzyle, NH(alkyle en C1-C4), NHPhényle, NHBenzyle, ou un atome de chlore, un groupe alkyle en C1-C4, tel que le méthyle et le tert-butyle, CF3 et un résidu répondant à la formule (V) ;
R12 à R14 sont indépendamment choisis dans le groupe constitué par un atome d'hydrogène, un groupe hydroxy, OC(O)R25, dans lequel R25 est un groupe O(alkyle en C1-C4), OPhényle, OBenzyle, NH(alkyle en C1-C4), NHPhényle, NHBenzyle, ou un atome de chlore, et un résidu répondant à la formule (V) ; et
la ligne ondulée indique le point d'attache ;
la formule (V) est un résidu tel que représenté ci-dessous 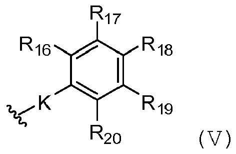 dans laquelle
R16 à R20 sont indépendamment choisis dans le groupe constitué par un atome d'hydrogène, un groupe hydroxy, et OC(O)R26, dans lequel R26 est un groupe O(alkyle en C1-C4), OPhényle, OBenzyle, NH(alkyle en C1-C4), NHPhényle, NHBenzyle, ou un atome de chlore ;
« K » est une liaison directe, C(O), O, SO2, CH2, C(CH3)2 ou C(CF3)2 ; et
la ligne ondulée indique le point d'attache ; 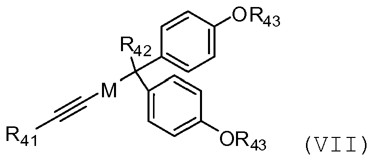 dans laquelle
M est une liaison directe, CH2, ou un groupe phénylène ;
R41 est un atome d'hydrogène, un groupe alkyle en C1-C4 ou phényle ;
R42 est un atome d'hydrogène, un groupe méthyle, CF3, phényle ou un résidu répondant à la formule (VIII) 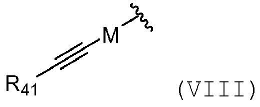 dans laquelle M et R41 sont tels que décrits ci-dessus pour la formule (VII) ;
la ligne ondulée indique le point d'attache ; et
R43 est un atome d'hydrogène, un groupe C(O) O (alkyle en C1-C4), C(O)OPhényle, C(O)OBenzyle, C(O)NH(alkyle en C1-C4), C(O)NHPhényle, C(O)NHBenzyle, ou C(O)Cl, ou provenant des composés selon le groupe constitué de 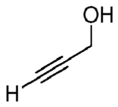 et

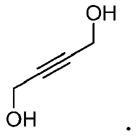

2. Polycarbonate aromatique réticulable selon la revendication 1, dans lequel R27 est un atome d'hydrogène.

3. Polycarbonate aromatique réticulable selon l'une quelconque des revendications 1 ou 2, dans lequel « D » est une liaison directe.

4. Polycarbonate aromatique réticulable selon l'une quelconque des revendications 1 à 3, dans lequel R1 et R5 sont des atomes d'hydrogène, et R6, R10, R11, R15, R16 et R20, s'ils sont présents, sont des atomes d'hydrogène.

5. Polycarbonate aromatique réticulable selon l'une quelconque des revendications 1 à 4, dans lequel « E » est choisi dans le groupe constitué par un atome d'hydrogène et un résidu répondant à la formule (IV).

6. Polycarbonate aromatique réticulable selon l'une quelconque des revendications 1 à 5, dans lequel R2 et R4, dans l'un desdits au moins deux composés acétyléniques différents, sont des résidus répondant à la formule (III), dans laquelle l'un de R7 à R9 dans R2 et R4 à la fois sont un groupe hydroxy, OC(O)O(alkyle en C1-C4), OC(0)OPhényle, OC(O)OBenzyle, OC(O)NH(alkyle en C1-C4), OC(O)NHPhényle, OC(O)NHBenzyle, ou OC(O)C1, les deux autres étant des atomes d'hydrogène, et/ou « E » et « D » sont choisis de telle sorte que l'un desdits au moins deux composés acétyléniques différents est symétrique par rapport à la triple liaison.

7. Polycarbonate aromatique réticulable selon l'une quelconque des revendications 1 à 6, dans lequel, dans l'un desdits au moins deux composés acétyléniques différents, R1 et R5 sont des atomes d'hydrogène, l'un de R2 à R4 est un groupe hydroxy, OC(O)(alkyle en C1-C4), OC(O)OPhényle, OC(O)OBenzyle, OC(O)NH(alkyle en C1-C4), OC(O)NHPhényle, OC(O)NHbenzyle, OC(O)Cl, ou un résidu répondant à la formule (III), dans lequel R6 et R10 sont des atomes d'hydrogène, l'un de R7 à R9 est un groupe hydroxy, ou OC(O)R23, dans lequel R23 est un groupe O(alkyle en C1-C4), OPhényle, OBenzyle, NH(alkyle en C1-C4), NHPhényle, NHBenzyle, ou un atome de chlore, et les deux autres de R7 à R9 étant des atomes d'hydrogène, et les deux autres de R2 à R4 étant des atomes d'hydrogène.

8. Polycarbonate aromatique réticulable selon l'une quelconque des revendications 1 à 7, dans lequel « A », « D », « E », « G », et « K », s'ils sont présents, sont indépendamment choisis dans le groupe constitué par un liaison directe et C(O).

9. Polycarbonate aromatique réticulable selon l'une quelconque des revendications 1 à 8, dans lequel les composés acétyléniques sont choisis dans le groupe constitué par :

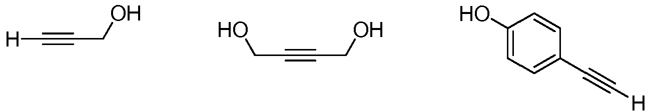

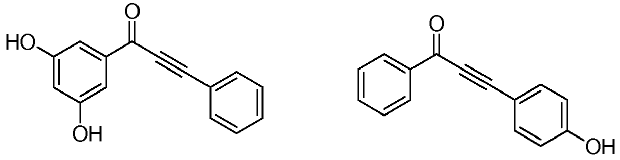

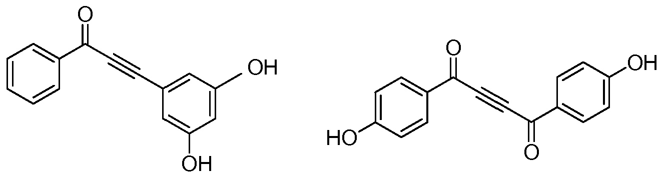

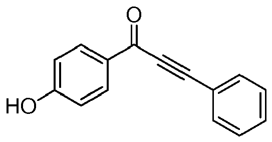

10. Polycarbonate aromatique réticulable selon l'une quelconque des revendications 1 à 9, dans lequel ledit diol aromatique est un diol répondant à la formule (IX) 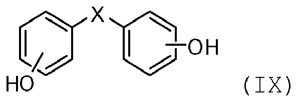 dans laquelle X est une liaison directe, C(CH₃)₂, CH₂, C(CF₃)₂, C(O), 0 ou SO₂.

11. Polycarbonate aromatique réticulable selon l'une quelconque des revendications 1 à 10, dans lequel le rapport entre ledit composé acétylénique et ledit diol aromatique dans la co-polymérisation est supérieur à 1:50, mais inférieur à 1:2.

12. Polycarbonate aromatique réticulable selon l'une quelconque des revendications 1 à 11, dans lequel ladite source de dioxyde de carbone est le phosgène, l'urée, le carbonate de diméthyle, le carbonate de diéthyle, le carbonate de diphényle, le carbonate de bis-allyle, la N,N'-diméthylurée, la N,N'-diéthylurée, la N-éthylurée, la N-phényl-N'-éthylurée, ou un composé répondant à la formule XII, 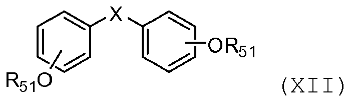 dans laquelle X est une liaison directe, un groupe C(CH₃)₂, CH₂, C(CF₃)₂, C(O), O ou SO₂ ; et
R51 est un groupe C(O)Cl, C(O)NH2, C(O)Ométhyle, ou C(O)Oéthyle.

13. Polycarbonate aromatique réticulable selon l'une quelconque des revendications 1 à 12, ayant un poids moléculaire moyen en poids (Mp) de 30 000 ou moins.

14. Composition, dans laquelle ladite composition comprend entre 0,1 et 99,9 % en poids du polycarbonate aromatique réticulable selon l'une quelconque des revendications 1 à 13, et une charge, un stabilisant, une fibre, un plastifiant, un lubrifiant, un modificateur d'impact, un modificateur d'isolation, un agent gonflant, d'expansion ou moussant, un agent collant, un pigment, et/ou un polymère additionnel, tel qu'un polycarbonate aromatique.

15. Article pouvant être obtenu par la mise en forme d'au moins un polycarbonate aromatique réticulable selon l'une quelconque des revendications 1 à 13, ou d'au moins une composition selon la revendication 14, dans lequel ledit polycarbonate aromatique réticulable a été réticulé.
